# EUROPEAN PATENT APPLICATION

(11) **EP 4 525 334 A1**
(43) Date of publication of application: **19.03.2025**
(21) Application number: 23814973.6
(22) Date of filing: 17.05.2023
(51) Int. Cl.: H04L 1/00

(54) **SENSING METHOD, APPARATUS AND SYSTEM**

(30) Priority: 31.05.2022 CN 202210612707; 23.09.2022 CN 202211168228
(71) Applicant: Huawei Technologies Co., Ltd., Shenzhen, Guangdong 518129 (CN)
(72) Inventor: DU, Rui, Shenzhen, Guangdong 518129 (CN); XIN, Yan, Shenzhen, Guangdong 518129 (CN); HAN, Xiao, Shenzhen, Guangdong 518129 (CN); NAREN, Gerile, Shenzhen, Guangdong 518129 (CN); HU, Mengshi, Shenzhen, Guangdong 518129 (CN)
(74) Representative: Isarpatent
(86) International application number: PCT/CN2023/094902
(87) International publication number: WO 2023/231788

(57) **Abstract**

Embodiments of this application provide a sensing method and apparatus, and a system, and relate to the communication field, so that TRN field information exchange is implemented by using a repetition unit in a TRN field in a multistatic sensing PPDU in an enhanced DMG multistatic sensing mode, to ensure implementation of multistatic sensing. A specific solution is as follows: A first device generates indication information. The indication information indicates a format of a first training unit in a training field, the first training unit is used by a second device to perform sensing measurement, a length of the first training unit is longer than a length of a second training unit, and the second training unit includes a training subfield indicated by a first field and a training subfield indicated by a second field. The first device sends the indication information to the second device. Embodiments of this application are used in a measurement sensing process in the multistatic sensing mode.

## Description

This application claims priority to Chinese Patent Application No. 202210612707.2, filed with the China National Intellectual Property Administration on May 31, 2022 and entitled "SENSING METHOD AND APPARATUS, AND SYSTEM".

This application claims priority to Chinese Patent Application No. 202211168228.2, filed with the China National Intellectual Property Administration on September 23, 2022 and entitled "SENSING METHOD AND APPARATUS, AND SYSTEM". Both of the two claimed Chinese patent applications are incorporated herein by reference in their entireties.

### TECHNICAL FIELD

Embodiments of this application relate to the communication field, and in particular, to a sensing method and apparatus, and a system.

### BACKGROUND

Institute of Electrical and Electronics Engineers (Institute of Electrical and Electronics Engineers, IEEE) 802.11bf is a next generation wireless standard for passive object sensing, and may be referred to as 11bf for short. 11bf can be used to perform corresponding parameter estimation and subsequent action/behavior recognition on a target based on a received signal. 11bf includes a low-frequency standard and a high-frequency standard. The high frequency standard includes a multistatic sensing (multistatic sensing) mode. In this mode, a plurality of devices may participate in a sensing procedure, and at least one sensing transmitter and at least one sensing receiver may exist. Main phases of the sensing procedure include measurement setup (measurement setup) and measurement instance (measurement instance).

In the measurement setup process, the sensing transmitter and the sensing receiver may complete confirmation of a device role, confirmation of a sensing type (for example, the multistatic sensing in this solution), confirmation of sensing measurement parameter exchange, and the like in a sensing process based on a measurement setup request and a measurement setup response. After the measurement setup is completed, one or more measurement instances may be used to perform sensing measurement feedback based on a previously confirmed measurement parameter. In the measurement instance process, the sensing transmitter sends at least one multistatic sensing (multistatic sensing) physical layer convergence protocol data unit (physical layer convergence protocol data unit, PPDU), and the sensing receiver receives the multistatic sensing PPDU to perform sensing measurement. To maintain compatibility with a previous standard (for example, 802.11ay), in 802.11bf, a training (training, TRN) field is mainly used in the multistatic sensing to implement sensing measurement. However, in current 11ay, a structure of TRN and information exchange are mainly for a single receiver, and the structure and the information that are in TRN in 11ay are directly reused in the multistatic sensing in 11bf. If a plurality of sensing receivers participate in sensing measurement, the information in TRN cannot be correctly transferred.

### SUMMARY

Embodiments of this application provide a sensing method and apparatus, and a system, to ensure correct transfer of information in TRN when the information in TRN in a multistatic sensing mode is exchanged, thereby improving sensing measurement performance.

To achieve the foregoing objectives, the following technical solutions are used in embodiments of this application.

According to a first aspect, a sensing method is provided. The method includes: A first device generates indication information. The indication information indicates a format of a first training unit in a training field, the first training unit is used by a second device to perform sensing measurement, a length of the first training unit is longer than a length of a second training unit, and the second training unit includes a training subfield indicated by a first field and a training subfield indicated by a second field.

The first device may be a sensing initiator, for example, an AP. The second device may be a sensing responder, for example, a STA. When the sensing initiator is a sensing transmitter, the sensing responder may be a sensing receiver. Alternatively, when the sensing initiator is a sensing receiver, the sensing responder may be a sensing transmitter. In embodiments of this application, an example in which the sensing initiator is the sensing transmitter and the sensing responder is the sensing receiver is used for description. The sensing transmitter may be understood as a side that sends a multistatic sensing PPDU, and the sensing receiver may be understood as a side that receives the multistatic sensing PPDU.

In a multistatic sensing mode, one sensing transmitter may set up sensing connection to a plurality of sensing receivers. The training subfield herein may be a TRN subfield. One training unit, namely, one TRN unit, includes a plurality of TRN subfields. In some cases, some TRN subfields are used by the sensing receiver to perform phase tracking, and some TRN subfields are used to perform scanning sensing. The TRN unit may be included in a TRN field in the multistatic sensing PPDU, and the TRN field may include a plurality of TRN units. A single TRN unit may be understood as a repetition unit in the PPDU.

The sensing measurement described above may include the phase tracking and the scanning sensing.

In the multistatic sensing mode, if a quantity of TRN subfields used by a single sensing receiver to perform phase tracking is large, or a quantity of sensing receivers is large, there may be no redundant TRN subfield that is in the single TRN unit and that is used to perform scanning sensing. Implementation of multistatic sensing is affected. In this application, the first device may send the indication information to the second device. The length that is indicated by the indication information and that is of the first training unit is longer than the length of the second training unit, and the second training unit is equivalent to the existing single TRN unit. It is equivalent to increasing a length of the repetition unit in the TRN field by increasing a length of the TRN unit, to implement multistatic sensing. An information exchange manner of the format of the first training unit in this design in this application is equivalent to indicating the second device to jointly interpret the TRN subfields. In the case of the joint interpretation, the first training unit includes a TRN subfield that may be used by the second device to perform phase tracking, and also includes a TRN subfield that may be used to perform scanning sensing. In this way, it can be ensured that a parameter of the TRN field is correctly transferred during TRN parameter exchange in the multistatic sensing mode, and the implementation of the multistatic sensing is ensured.

In a possible design, the training field is included in the multistatic sensing physical layer convergence protocol data unit PPDU. In other words, the TRN field is included in the multistatic sensing PPDU.

In a possible design, the first training unit includes a first training subfield and/or a second training subfield, the first training subfield is used to perform phase tracking, and the second training subfield is used to perform scanning sensing. To be specific, a single training unit in this application may be used by the second device to perform phase tracking and scanning sensing, to ensure the implementation of the multistatic sensing.

In a possible design, the first training unit includes K-fold second training units, and K is an integer greater than or equal to one. For example, when K is two, it is equivalent to that TRN subfields in two second training units TRN units are combined, in other words, the repetition unit in the TRN field includes the TRN subfields in the two second training units. Some of the TRN subfields in the two second training units are first training subfields, and some TRN subfields are second training subfields. The phase tracking may be understood as estimating a frequency offset and a time offset by using a plurality of TRN subfields, and performing compensation.

In a possible design, the first training unit includes the training subfield indicated by the first field and a training subfield indicated by K-fold second fields, and K is an integer greater than or equal to one.

In this design, the training subfield indicated by the K-fold second fields may be understood as performing K-fold processing on a TRN subfield indicated by an EDMG TRN-unit M field (second field) in the TRN field. Each time one second device is added, it is equivalent to allocating, from the first training unit, some TRN subfields used by the second device to perform phase tracking. In this way, on a basis of performing K-fold processing on the TRN subfield indicated by the second field, this is equivalent to that the repetition unit in the TRN field is lengthened, and the repetition unit is updated to the first training unit. In this way, when a plurality of second devices participate in the implementation of the multistatic sensing, it can be ensured, by using the first training unit, that the plurality of second devices can complete phase tracking and scanning sensing in the first training unit, to ensure the implementation of the multistatic sensing.

In a possible design, the first training unit includes a training subfield indicated by K-fold first fields and the training subfield indicated by the second field, and K is an integer greater than or equal to one. The training subfield indicated by the K-fold first fields may be understood as performing K-fold processing on a TRN subfield indicated by an EDMG TRN-unit P field (first field) in the TRN field. Each time one second device is added, it is equivalent to allocating, from the first training unit, some TRN subfields used by the second device to perform phase tracking. In this way, on a basis of performing K-fold processing on the TRN subfield indicated by the first field, this is also equivalent to that the repetition unit in the TRN field is lengthened, and the repetition unit is updated to the first training unit. In this way, when a plurality of second devices participate in the implementation of the multistatic sensing, it can be ensured, by using the first training unit, that the plurality of second devices can complete phase tracking and scanning sensing in the first training unit, to ensure the implementation of the multistatic sensing.

In a possible design, the first training unit includes at least one second training unit and K training subfields, and K is an integer greater than or equal to one.

In this design, it is equivalent to that the first training unit in the TRN field includes at least one TRN unit (second training unit) and K TRN subfields, in other words, the at least one TRN unit (second training unit) and the K TRN subfields are combined. Before the combination, the repetition unit in the TRN field is the single TRN unit. After the at least one TRN unit and the K TRN subfields are combined as the first training unit, some TRN subfields in the combined structure are first training subfields, and some TRN subfields are second training subfields. In this way, on a basis that the repetition unit in the TRN field is lengthened, in other words, the first training unit is used as the repetition unit, the correct transfer of the TRN field can be ensured during the TRN parameter exchange in the multistatic sensing mode, to ensure the implementation of the multistatic sensing.

In a possible design, the K training subfields are K training subfields immediately following the training subfield indicated by the second field. In this design, it is equivalent to that the repetition unit (first training unit) in the TRN field includes the TRN subfield indicated by the first field, the TRN subfield indicated by the second field, and the K TRN subfields immediately following the TRN subfield indicated by the second field.

In a possible design, the K training subfields are K training subfields immediately following the training subfield indicated by the first field. In this design, it is equivalent to that the repetition unit (first training unit) in the TRN field includes the TRN subfield indicated by the first field, the K TRN subfields immediately following the TRN subfield indicated by the first field, and the TRN subfield indicated by the second field.

In a possible design, when the first training unit includes the training subfield indicated by the first field and the training subfield indicated by the K-fold second fields, the indication information may indicate a high-order bit of a length of the training subfield indicated by the K-fold second fields, and a low-order bit of the length of the training subfield indicated by the K-fold second fields is a bit of the second field.

For example, a quantity of TRN subfields indicated by a second field in a single second training unit is a binary bit value "1111"+1, and an indication value of the second field is 16. When a bit value of the indication information is "01", after the high-order bit and the low-order bit are combined, a quantity of TRN subfields (second training subfields) that is indicated by the first training unit in the TRN field and that may be used to perform scanning sensing is "011111"+1, that is, 32 TRN subfields. It is equivalent to increasing a quantity of TRN subfields in the repetition unit in the TRN field, to ensure the implementation of the multistatic sensing.

In a possible design, when the first training unit includes the training subfield indicated by the K-fold first fields and the training subfield indicated by the second field, the indication information indicates a high-order bit of a length of the training subfield indicated by the K-fold first fields, and a low-order bit of the length of the training subfield indicated by the K-fold first fields is a bit of the first field.

For example, a quantity of TRN subfields indicated by a first field in a single second training unit is a binary bit value "11", indicating four TRN subfields, and an indication value of the first field is 4. When a bit value of the indication information is "01", after the high-order bit and the low-order bit are combined, a quantity of first training subfields in the first training unit in the TRN field is "0111", that is, seven TRN subfields. It is equivalent to increasing a quantity of TRN subfields in the repetition unit in the TRN field, to ensure the implementation of the multistatic sensing.

In a possible design, that a first device determines indication information includes: The first device generates the indication information when determining that at least one of following two conditions is met. The two conditions include: A quantity of second devices participating in the sensing measurement is greater than or equal to a first preset quantity; and a quantity of training subfields indicated by the first field is greater than or equal to a second preset quantity.

In other words, in this application, the first device may determine the repetition unit in the TRN field based on a situation. When the quantity of second devices participating in the sensing measurement in the multistatic sensing mode is large, or when the quantity of TRN subfields that is indicated by the first field in the TRN unit and that may be used to perform phase tracking is large, the indication information needs to be determined, in other words, the repetition unit in the TRN field needs to be lengthened, to ensure the implementation of the multistatic sensing.

In a possible design, the indication information is carried in a sensing measurement setup request, a multistatic sensing request, or the multistatic sensing physical layer convergence protocol data unit PPDU. When the indication information is carried in the sensing measurement setup request, it may be considered that the indication information is notified to the second device in a measurement setup process. When the indication information is carried in the multistatic sensing request, it may be considered that the indication information is carried in a multistatic sensing request in a measurement instance process. When the indication information is carried in the multistatic sensing PPDU, it may be considered that the indication information is carried in a multistatic sensing EDMG-header-A field. This is not limited in this application. In this way, on a basis of sending the indication information to the second device, the second device may be enabled to jointly interpret the TRN subfields. The implementation of the multistatic sensing is ensured based on the lengthened repetition unit, namely, the first training unit, in the TRN field.

According to a second aspect, a sensing method is provided. The method includes: A second device receives indication information. The indication information indicates a format of a first training unit in a training field, the first training unit is used by the second device to perform sensing measurement, a length of the first training unit is longer than a length of a second training unit, and the second training unit includes a training subfield indicated by a first field and a training subfield indicated by a second field. The second device performs sensing measurement based on the format of the first training unit.

For beneficial effect of the second aspect, refer to the description of the first aspect.

In a possible design, the training field is included in a multistatic sensing physical layer convergence protocol data unit PPDU.

In a possible design, the first training unit includes a first training subfield and/or a second training subfield, the first training subfield is used to perform phase tracking, and the second training subfield is used to perform scanning sensing.

In a possible design, the first training unit includes K-fold second training units, and K is an integer greater than or equal to one.

In a possible design, the first training unit includes the training subfield indicated by the first field and a training subfield indicated by K-fold second fields, and K is an integer greater than or equal to one.

In a possible design, the first training unit includes a training subfield indicated by K-fold first fields and the training subfield indicated by the second field, and K is an integer greater than or equal to one.

In a possible design, the first training unit includes at least one second training unit and K training subfields, and K is an integer greater than or equal to one.

In a possible design, the K training subfields are K training subfields immediately following the training subfield indicated by the second field.

In a possible design, the K training subfields are K training subfields immediately following the training subfield indicated by the first field.

In a possible design, the indication information indicates a high-order bit of a length of the training subfield indicated by the K-fold second fields, and a low-order bit of the length of the training subfield indicated by the K-fold second fields is a bit of the second field.

In a possible design, the indication information indicates a high-order bit of a length of the training subfield indicated by the K-fold first fields, and a low-order bit of the length of the training subfield indicated by the K-fold first fields is a bit of the first field.

In a possible design, the indication information is carried in a sensing measurement setup request, a multistatic sensing request, or the multistatic sensing physical layer convergence protocol data unit PPDU.

According to a third aspect, a sensing method is provided. The method includes: A first device determines, based on a quantity of second devices participating in sensing measurement, a quantity of training subfields indicated by a first field in a training unit. The training subfield indicated by the first field is used to perform phase tracking, and a larger quantity of second devices participating in the sensing measurement indicates a smaller quantity of training subfields indicated by the first field. The first device sends a first training subfield to the second device.

When the first device is a sensing initiator and a sensing transmitter, and the second device is a sensing responder and a sensing receiver, in other words, on a basis that the first device determines the quantity of second devices participating in the sensing measurement, the first device may determine a format of the training unit in a TRN field based on the quantity of second devices. In a multistatic sensing mode, if the quantity of second devices participating in the sensing measurement is larger, the first device enables a quantity of TRN subfields that is indicated by the first field, namely, EDMG TRN-unit P, in the TRN field and that is used to perform phase tracking to be smaller. In this way, both the TRN subfield that may be used to perform phase tracking and a TRN subfield that may be used to perform scanning sensing may exist in the training unit. This ensures implementation of multistatic sensing.

In a possible design, the training unit is included in a training field in a multistatic sensing physical layer convergence protocol data unit PPDU. In other words, the TRN subfield used to perform phase tracking is a subfield in a TRN unit in the TRN field in the multistatic sensing PPDU.

In a possible design, that a first device determines, based on a quantity of second devices participating in sensing measurement, a quantity of training subfields indicated by a first field in a training unit includes: When determining that the quantity of second devices participating in the sensing measurement is greater than or equal to a preset threshold, the first device determines, according to a correspondence between the quantity of second devices and the quantity of training subfields indicated by the first field, the quantity of training subfields indicated by the first field.

For example, a table exists in the first device, and the table stores the correspondence. When determining that the quantity of sensing receivers is large and is greater than or equal to the preset threshold, the first device may determine, according to the correspondence, a quantity of TRN subfields, occupied by a single second device, that is indicated by the first field in the TRN unit in the TRN field and that is used to perform phase tracking. In this way, a single TRN unit has both the TRN subfield that may be used to perform phase tracking and the TRN subfield that may be used to perform scanning sensing. This ensures the implementation of the multistatic sensing.

According to a fourth aspect, a sensing method is provided. The method includes: A first device determines, based on a quantity of training subfields indicated by a first field in a training unit, a maximum quantity of second devices participating in sensing measurement. The training subfield indicated by the first field is used to perform phase tracking, and a larger quantity of training subfields indicated by the first field indicates a smaller maximum quantity of second devices. The first device sends a first training subfield to the second device.

In other words, before the first device and the second device perform measurement setup, the first device may first determine the maximum quantity of second devices based on a quantity of TRN subfields, occupied by a single second device, that is indicated by the first field in the TRN unit in a TRN field and that is used to perform phase tracking. In this way, in a single TRN unit, if the quantity of TRN subfields indicated by the first field is large, a quantity of second devices participating in the sensing measurement may be limited. In this way, the single TRN unit has both the TRN subfield that may be used by the second device to perform phase tracking and a TRN subfield that may be used by the second device to perform scanning sensing. This ensures implementation of multistatic sensing.

In a possible design, the training unit is included in a training field in a multistatic sensing physical layer convergence protocol data unit PPDU.

In a possible design, that a first device determines, based on a quantity of training subfields indicated by a first field in a training unit, a maximum quantity of second devices participating in sensing measurement includes: When determining that the quantity of training subfields indicated by the first field is greater than or equal to a preset threshold, the first device determines the maximum quantity of second devices according to a correspondence between the quantity of training subfields indicated by the first field in the training field and the maximum quantity of second devices.

For example, a table exists in the first device, and the table stores the correspondence. When determining that the quantity of TRN subfields that is indicated by the first field in the single TRN unit and that is used by the single second device to perform phase tracking is large, the first device may determine, according to the correspondence, the quantity of second devices participating in the sensing. In this way, the single TRN unit has both the TRN subfield that may be used to perform phase tracking and the TRN subfield that may be used to perform scanning sensing.

This ensures the implementation of the multistatic sensing.

According to a fifth aspect, a sensing apparatus is provided. The sensing apparatus is included in a first device, and the sensing apparatus includes an indication generation unit, configured to generate indication information. The indication information indicates a format of a first training unit in a training field, the first training unit is used by a second device to perform sensing measurement, a length of the first training unit is longer than a length of a second training unit, and the second training unit includes a training subfield indicated by a first field and a training subfield indicated by a second field.

For beneficial effect of the fifth aspect, refer to the description of the first aspect.

In a possible design, the training field is included in a multistatic sensing physical layer convergence protocol data unit PPDU.

In a possible design, the first training unit includes a first training subfield and/or a second training subfield, the first training subfield is used to perform phase tracking, and the second training subfield is used to perform scanning sensing.

In a possible design, the first training unit includes K-fold second training units, and K is an integer greater than or equal to one.

In a possible design, the first training unit includes the training subfield indicated by the first field and a training subfield indicated by K-fold second fields, and K is an integer greater than or equal to one.

In a possible design, the first training unit includes a training subfield indicated by K-fold first fields and the training subfield indicated by the second field, and K is an integer greater than or equal to one.

In a possible design, the first training unit includes at least one second training unit and K training subfields, and K is an integer greater than or equal to one.

In a possible design, the K training subfields are K training subfields immediately following the training subfield indicated by the second field.

In a possible design, the K training subfields are K training subfields immediately following the training subfield indicated by the first field.

In a possible design, the indication information indicates a high-order bit of a length of the training subfield indicated by the K-fold second fields, and a low-order bit of the length of the training subfield indicated by the K-fold second fields is a bit of the second field.

In a possible design, the indication information indicates a high-order bit of a length of the training subfield indicated by the K-fold first fields, and a low-order bit of the length of the training subfield indicated by the K-fold first fields is a bit of the first field.

In a possible design, that a first device generates information includes: The first device generates the indication information when determining that at least one of following two conditions is met. The two conditions include: A quantity of second devices participating in the sensing measurement is greater than or equal to a first preset quantity; and a quantity of training subfields indicated by the first field is greater than or equal to a second preset quantity.

In a possible design, the indication information is carried in a sensing measurement setup request, a multistatic sensing request, or the multistatic sensing physical layer convergence protocol data unit PPDU.

According to a sixth aspect, a sensing apparatus is provided. The sensing apparatus is included in a second device, and the sensing apparatus includes: a receiving unit, configured to receive indication information, where the indication information indicates a format of a first training unit in a training field, the first training unit is used by the second device to perform sensing measurement, a length of the first training unit is longer than a length of a second training unit, and the second training unit includes a training subfield indicated by a first field and a training subfield indicated by a second field; and a sensing measurement unit, configured to perform sensing measurement based on the format of the first training unit.

For beneficial effect of the sixth aspect, refer to the description of the second aspect.

In a possible design, the training field is included in a multistatic sensing physical layer convergence protocol data unit PPDU.

In a possible design, the first training unit includes a first training subfield and/or a second training subfield, the first training subfield is used to perform phase tracking, and the second training subfield is used to perform scanning sensing.

In a possible design, the first training unit includes K-fold second training units, and K is an integer greater than or equal to one.

In a possible design, the first training unit includes the training subfield indicated by the first field and a training subfield indicated by K-fold second fields, and K is an integer greater than or equal to one.

In a possible design, the first training unit includes a training subfield indicated by K-fold first fields and the training subfield indicated by the second field, and K is an integer greater than or equal to one.

In a possible design, the first training unit includes at least one second training unit and K training subfields, and K is an integer greater than or equal to one.

In a possible design, the K training subfields are K training subfields immediately following the training subfield indicated by the second field.

In a possible design, the K training subfields are K training subfields immediately following the training subfield indicated by the first field.

In a possible design, the indication information indicates a high-order bit of a length of the training subfield indicated by the K-fold second fields, and a low-order bit of the length of the training subfield indicated by the K-fold second fields is a bit of the second field.

In a possible design, the indication information indicates a high-order bit of a length of the training subfield indicated by the K-fold first fields, and a low-order bit of the length of the training subfield indicated by the K-fold first fields is a bit of the first field.

In a possible design, the indication information is carried in a sensing measurement setup request, a multistatic sensing request, or the multistatic sensing physical layer convergence protocol data unit PPDU.

According to a seventh aspect, a sensing apparatus is provided. The sensing apparatus is included in a first device, and the sensing apparatus includes: a determining unit, configured to determine, based on a quantity of second devices participating in sensing measurement, a quantity of training subfields indicated by a first field in a training unit, where the training subfield indicated by the first field is used to perform phase tracking, and a larger quantity of second devices participating in the sensing measurement indicates a smaller quantity of training subfields indicated by the first field; and a sending unit, configured to send the training unit to the second device.

For beneficial effect of the seventh aspect, refer to the description of the third aspect.

In a possible design, the training unit is included in a training field in a multistatic sensing physical layer convergence protocol data unit PPDU.

In a possible design, the determining unit is configured to: when determining that the quantity of second devices participating in the sensing measurement is greater than or equal to a preset threshold, determine, according to a correspondence between the quantity of second devices and the quantity of training subfields indicated by the first field, the quantity of training subfields indicated by the first field.

According to an eighth aspect, a sensing apparatus is provided. The sensing apparatus is included in a first device, and the sensing apparatus includes: a determining unit, configured to determine, based on a quantity of training subfields indicated by a first field in a training unit, a maximum quantity of second devices participating in sensing measurement, where the training subfield indicated by the first field is used to perform phase tracking, and a larger quantity of training subfields indicated by the first field indicates a smaller maximum quantity of second devices; and a sending unit, configured to send the training unit to the second device.

For beneficial effect of the eighth aspect, refer to the description of the fourth aspect.

In a possible design, the training unit is included in a training field in a multistatic sensing physical layer convergence protocol data unit PPDU.

In a possible design, the determining unit is configured to: when determining that the quantity of training subfields indicated by the first field is greater than or equal to a preset threshold, determine the maximum quantity of second devices according to a correspondence between the quantity of training subfields indicated by the first field in the training field and the maximum quantity of second devices.

According to a ninth aspect, a sensing device is provided. The sensing device includes a processing circuit and an output interface that is internally connected to and communicates with the processing circuit.

The processing circuit is configured to generate indication information. The indication information indicates a format of a first training unit in a training field, the first training unit is used by a second device to perform sensing measurement, a length of the first training unit is longer than a length of a second training unit, and the second training unit includes a training subfield indicated by a first field and a training subfield indicated by a second field. The output interface is configured to send the indication information to the second device.

According to a tenth aspect, a sensing device is provided. The sensing device includes a processing circuit and an input interface that is internally connected to and communicates with the processing circuit.

The input interface is configured to receive indication information. The indication information indicates a format of a first training unit in a training field, the first training unit is used by a second device to perform sensing measurement, a length of the first training unit is longer than a length of a second training unit, and the second training unit includes a training subfield indicated by a first field and a training subfield indicated by a second field. The processing circuit is configured to perform sensing measurement based on the format of the first training unit.

According to an eleventh aspect, a first device is provided. The first device includes a processing circuit and an output interface that is internally connected to and communicates with the processing circuit.

The processing circuit is configured to determine, based on a quantity of second devices participating in sensing measurement, a quantity of training subfields indicated by a first field in a training unit. The training subfield indicated by the first field is used to perform phase tracking, and a larger quantity of second devices participating in the sensing measurement indicates a smaller quantity of training subfields indicated by the first field.

The output interface is configured to send the training unit to the second device.

According to a twelfth aspect, a first device is provided. The first device includes a processing circuit and an output interface that is internally connected to and communicates with the processing circuit.

The processing circuit is configured to determine, based on a quantity of training subfields indicated by a first field in a training unit, a maximum quantity of second devices participating in sensing measurement. The training subfield indicated by the first field is used to perform phase tracking, and a larger quantity of training subfields indicated by the first field indicates a smaller maximum quantity of second devices.

The output interface is configured to send the training unit to the second device.

According to a thirteenth aspect, a first device is provided. The first device includes a processor and a transceiver that is internally connected to and communicates with the processor.

The processor is configured to generate indication information. The indication information indicates a format of a first training unit in a training field, the first training unit is used by a second device to perform sensing measurement, a length of the first training unit is longer than a length of a second training unit, and the second training unit includes a training subfield indicated by a first field and a training subfield indicated by a second field.

The transceiver is configured to send the indication information to the second device.

According to a fourteenth aspect, a second device is provided. The second device includes a processor and a transceiver that is internally connected to and communicates with the processor.

The transceiver is configured to receive indication information. The indication information indicates a format of a first training unit in a training field, the first training unit is used by a second device to perform sensing measurement, a length of the first training unit is longer than a length of a second training unit, and the second training unit includes a training subfield indicated by a first field and a training subfield indicated by a second field.

The processor is configured to perform sensing measurement based on the format of the first training unit.

According to a fifteenth aspect, a first device is provided. The first device includes a processor and a transceiver that is internally connected to and communicates with the processor.

The processor is configured to determine, based on a quantity of second devices participating in sensing measurement, a quantity of training subfields indicated by a first field in a training unit. The training subfield indicated by the first field is used to perform phase tracking, and a larger quantity of second devices participating in the sensing measurement indicates a smaller quantity of training subfields indicated by the first field.

The transceiver is configured to send the training unit to the second device.

According to a sixteenth aspect, a first device is provided. The first device includes a processor and a transceiver that is internally connected to and communicates with the processor.

The processor is configured to determine, based on a quantity of training subfields indicated by a first field in a training unit, a maximum quantity of second devices participating in sensing measurement. The training subfield indicated by the first field is used to perform phase tracking, and a larger quantity of training subfields indicated by the first field indicates a smaller maximum quantity of second devices.

The transceiver is configured to send the training unit to the second device.

According to a seventeenth aspect, embodiments of this application provide a computer-readable storage medium, configured to store a computer program. The computer program includes instructions used to perform any one of the first aspect or the possible implementations of the first aspect.

According to an eighteenth aspect, embodiments of this application provide a computer-readable storage medium, configured to store a computer program. The computer program includes instructions used to perform any one of the second aspect or the possible implementations of the second aspect.

According to a nineteenth aspect, embodiments of this application provide a computer-readable storage medium, configured to store a computer program. The computer program includes instructions used to perform any one of the third aspect or the possible implementations of the third aspect.

According to a twentieth aspect, embodiments of this application provide a computer-readable storage medium, configured to store a computer program. The computer program includes instructions used to perform any one of the fourth aspect or the possible implementations of the fourth aspect.

According to a twenty-first aspect, embodiments of this application provide a computer program product, configured to store a computer program. The computer program includes instructions used to perform any one of the first aspect or the possible implementations of the first aspect.

According to a twenty-second aspect, embodiments of this application provide a computer program product, configured to store a computer program. The computer program includes instructions used to perform any one of the second aspect or the possible implementations of the second aspect.

According to a twenty-third aspect, embodiments of this application provide a computer program product, configured to store a computer program. The computer program includes instructions used to perform any one of the third aspect or the possible implementations of the third aspect.

According to a twenty-fourth aspect, embodiments of this application provide a computer program product, configured to store a computer program. The computer program includes instructions used to perform any one of the fourth aspect or the possible implementations of the fourth aspect.

According to a twenty-fifth aspect, embodiments of this application provide a communication system. The communication system includes the sensing apparatus according to the fifth aspect, the seventh aspect, or the eighth aspect; or the transmitter according to the ninth aspect or the thirteenth aspect; or the first device according to the eleventh aspect, the twelfth aspect, the fifteenth aspect, or the sixteenth aspect, or the sensing apparatus according to the sixth aspect; or the second device according to the tenth aspect or the fourteenth aspect.

It may be understood that any one of the first device, the second device, the sensing apparatus, the communication system, the computer-readable storage medium, the computer program product, or the like provided above may be used in the corresponding method provided above. Therefore, for beneficial effect that can be achieved, refer to beneficial effect in the corresponding method. Details are not described herein again.

These aspects or other aspects of this application are more concise and comprehensible in the following description.

### BRIEF DESCRIPTION OF DRAWINGS

FIG. 1(a) is a schematic diagram of a structure of a TRN field in an EDMG BRP TX PPDU structure according to an embodiment of this application; FIG. 1(b) is a schematic diagram of a multistatic sensing procedure according to an embodiment of this application;
both FIG. 2(a) and FIG. 2(b) are schematic diagrams of structures of multistatic sensing PPDUs according to an embodiment of this application;
FIG. 3 is a schematic diagram of a network architecture according to an embodiment of this application;
FIG. 4 is a schematic flowchart of a sensing method according to an embodiment of this application;
FIG. 5 is a schematic flowchart of a sensing method according to an embodiment of this application;
FIG. 6 is a schematic diagram of a format of a first training unit according to an embodiment of this application;
FIG. 7 is a schematic diagram of a format of a first training unit according to an embodiment of this application;
FIG. 8 is a schematic diagram of a structure of a DMG sensing measurement setup element according to an embodiment of this application;
FIG. 9 is a schematic diagram of a format of a time division duplex beam information field of a DMG multistatic sensing request according to an embodiment of this application;
FIG. 10 is a schematic flowchart of a sensing method according to an embodiment of this application;
FIG. 11 is a schematic diagram of a format of a first training unit according to an embodiment of this application;
FIG. 12 is a schematic flowchart of a sensing method according to an embodiment of this application;
FIG. 13 is a schematic diagram of a format of a first training unit according to an embodiment of this application;
FIG. 14 is a schematic flowchart of a sensing method according to an embodiment of this application;
FIG. 15 is a schematic diagram of a format of a first training unit according to an embodiment of this application;
FIG. 16 is a schematic flowchart of a sensing method according to an embodiment of this application;
FIG. 17 is a schematic flowchart of a sensing method according to an embodiment of this application;
FIG. 18 is a schematic diagram of a structure of a first device according to an embodiment of this application;
FIG. 19 is a schematic diagram of a structure of a first device according to an embodiment of this application;
FIG. 20 is a schematic diagram of a structure of an AP according to an embodiment of this application;
FIG. 21 is a schematic diagram of a structure of a second device according to an embodiment of this application;
FIG. 22 is a schematic diagram of a measurement feedback in a DMG multistatic sensing scenario according to an embodiment of this application;
FIG. 23 is a schematic diagram of another measurement feedback in a DMG multistatic sensing scenario according to an embodiment of this application;
FIG. 24 is a schematic diagram of a measurement feedback in a DMG coordinated monostatic sensing scenario according to an embodiment of this application;
FIG. 25 is a schematic diagram of another measurement feedback in a DMG coordinated monostatic sensing scenario according to an embodiment of this application; and
FIG. 26 is a schematic diagram of another measurement feedback in a DMG coordinated monostatic sensing scenario according to an embodiment of this application.

### DESCRIPTION OF EMBODIMENTS

In the description of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

In addition, in the descriptions of this application, "a plurality of" means two or more than two unless otherwise specified. "At least one of the following items (pieces)" or a similar expression thereof refers to any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, the word such as "example" or "for example" is used to represent giving an example, an illustration, or a description. Any embodiment or design solution described as "example" or "for example" in embodiments of this application is not to be construed as being more preferred or advantageous than other embodiments or design solutions. Exactly, use of the terms such as "example" or "for example" are intended to present a related concept in a specific manner for ease of understanding.

It may be understood that an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner. It may be understood that sequence numbers of processes do not mean execution sequences in various embodiments of this application. The execution sequences of the processes should be determined based on functions and internal logic of the processes, and should not be construed as any limitation on implementation processes of embodiments of this application.

It may be understood that, in this application, "when", "in a case", and "if" mean that corresponding processing is performed in an objective situation, are not intended to limit time, do not require a determining action during implementation, and do not mean any other limitation.

It may be understood that, in some scenarios, some optional features in embodiments of this application may be independently implemented without depending on another feature, for example, a solution on which the optional features are currently based, to resolve a corresponding technical problem and achieve corresponding effect. Alternatively, in some scenarios, the optional features may be combined with other features based on requirements. Correspondingly, the apparatus provided in embodiments of this application may also correspondingly implement these features or functions. Details are not described herein.

In this application, unless otherwise specified, for identical or similar parts in embodiments, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in different embodiments and the implementations/implementation methods in embodiments may be combined to form a new embodiment, implementation, or implementation method based on an internal logical relationship thereof. The following implementations of this application are not intended to limit the protection scope of this application.

### 1. Sensing initiator, sensing responder, sensing transmitter, and sensing receiver

The sensing initiator (sensing initiator) is a station, for example, an access point (access point, AP) or a STA (station), that initiates a wireless local area network (wireless local area network, WLAN) sensing process.

The sensing responder (sensing responder) is a station, for example, an AP or a STA, that participates in the WLAN sensing process initiated by the sensing initiator.

The sensing transmitter (sensing transmitter) is a station that sends a PPDU used to perform sensing measurement in the sensing process.

The sensing receiver (sensing receiver) is a station that receives the PPDU sent by the sensing transmitter and performs sensing measurement in the sensing process.

When the sensing initiator is the sensing transmitter, the sensing responder may be the sensing receiver. When the sensing responder is the sensing transmitter, the sensing initiator may be the sensing receiver.

In embodiments of this application, an example in which the sensing initiator is the sensing transmitter and the sensing responder is the sensing receiver is used for description.

### 2. 802.11bf

IEEE 802.11bf is a next-generation wireless standard that focuses on passive object sensing, and is referred to as 11bf for short in this application. A passive object herein may be understood as that a target does not carry any device, for example, the target is a human, an animal, or another object. 11bf may be used to perform corresponding parameter estimation, subsequent action/behavior recognition, and the like on the target based on a received signal. For example, parameters herein are parameters such as a speed, a distance, and an angle of the target. For example, actions/behavior is that the human walks, sleeps, or falls.

11bf includes a low-frequency standard and a high-frequency standard. For example, the low frequency is sub 7 GHz, and an implementation is mainly based on standards such as 802.11ac, 802.11ax, 802.11be, and a next generation. For example, the high frequency is 60 GHz, and an implementation is mainly based on standards such as 802.11ad, 802.11ay (referred to as 11ay for short in this application), and a next generation.

11bf mainly includes modes such as monostatic sensing, coordinated monostatic sensing, bistatic sensing, coordinated bistatic sensing, and multistatic sensing that are on 60 GHz.

The monostatic sensing is monostatic sensing or self-transmitting and self-receiving sensing. In this mode, a same device transmits and receives a sensing signal.

The coordinated monostatic sensing is extension of the monostatic sensing mode, in other words, one or more pieces of monostatic sensing are coordinated to perform sensing.

The bistatic sensing is bistatic sensing or receive/transmit separation sensing. In this mode, two devices separately transmit and receive a sensing signal.

The coordinated bistatic sensing is extension of the bistatic sensing mode, in other words, one or more pieces of bistatic sensing are coordinated to perform sensing.

The multistatic sensing is multistatic sensing. In this mode, a plurality of devices participate in the sensing, and one or more sensing transmitters and one or more sensing receivers may exist.

An information exchange manner of a TRN field in a multistatic sensing process in 11bf is mainly considered in the solutions of this application.

### 3. TRN field in 11ay

In an instance sensing process in 11bf, a format of a multistatic sensing PPDU sent by a transmitter to a receiver is mainly according to the 11ay protocol, and a format of the TRN field in the 11ay protocol and a related indication manner may be reused.

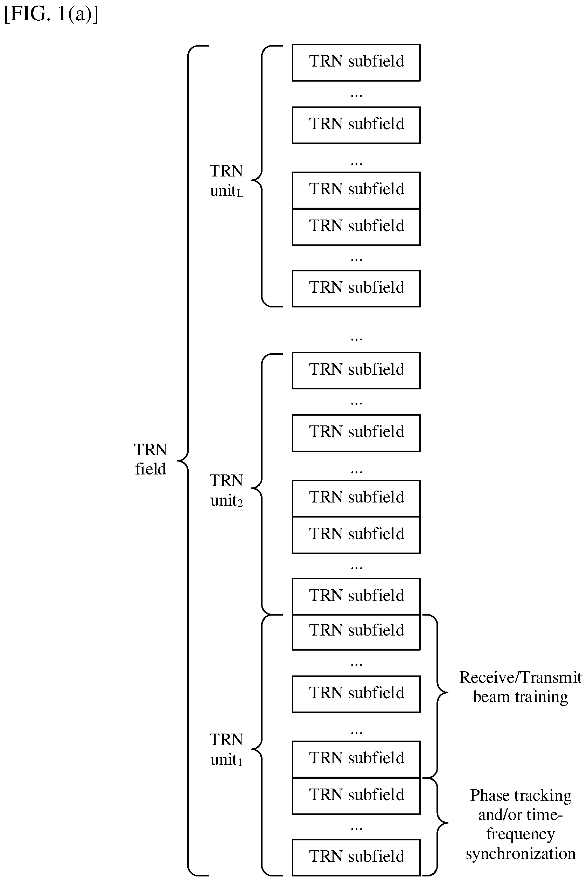

For a structure of the TRN field, refer to an example of a structure of an enhanced directional multi-gigabit (enhanced directional multi-gigabit, EDMG) BRP TX PPDU shown in FIG. 1(a). The TRN field includes L TRN units (units), for example, a TRN unit 1 (TRN unit 1), a TRN unit 2 (TRN unit 2), ..., and a TRN unit L (TRN unit L) shown in FIG. 1(a). L is an integer greater than or equal to one. A single TRN unit may be understood as a repetition unit in the TRN field. The single TRN unit includes a plurality of TRN subfields (subfields). Some TRN subfields in the single TRN unit are indicated by a parameter EDMG TRN-unit P, and the TRN subfield indicated by EDMG TRN-unit P may be used by the receiver to perform phase tracking and/or time-frequency synchronization. In other words, the receiver may perform frequency offset and time offset estimation by using structures of a plurality of repetition TRN subfields indicated by EDMG TRN-unit P, and perform frequency domain and time domain compensation. The plurality of repetition TRN subfields indicated by EDMG TRN-unit P are sent by the transmitter in a line of sight (line of sight, LOS).

Some TRN subfields in the single TRN unit are indicated by a parameter EDMG TRN-unit M, and a plurality of repetition TRN subfields indicated by EDMG TRN-unit M may be used to perform receive/transmit beam training. A quantity of the plurality of repetition TRN subfields indicated by EDMG TRN-unit M is indication value of EDMG TRN-unit M+1.

In view of this, currently, the TRN field in 11ay may be described in a related parameter description manner shown in Table 1. When a single carrier mode (single carrier mode) PPDU is used in 11ay to perform sensing measurement, a related parameter description of the TRN field may be carried in an EDMG-header-A field. When a control mode (control mode) PPDU is used in 11ay, a related parameter description of the TRN field may be carried in an EDMG-header-A1 field.

**Table 1 Related parameter description of the TRN field in 11ay**

| Field | Quantity of bits | Start bit location | Description | |
|---|---|---|---|---|
| EDMG TRN length (EDMG TRN length) | 8 | 64 | A quantity of TRN units carried in a PPDU is indicated, or a quantity of TRN units that is requested to be used to perform receive beam training is indicated, where the TRN unit is the repetition unit in the TRN field. | |
| RX TRN-units per each TX TRN-unit | 8 | 72 | When the EDMG TRN length field is set to 0, this field is reserved. | |
| | | | Otherwise, this field plus 1 indicates a quantity of TRN units that is in the TRN field and that is continuously sent by the sensing transmitter by using a same antenna weight vector (antenna weight vector, AWV). | |
| EDMG TRN-unit P | 2 | 80 | When the PPDU is an EDMG BRP-TX PPDU and an EDMG BRP-RX/TX PPDU, this field indicates a quantity of TRN subfields that is in one TRN unit and that is sent by using an AWV same as that of a preamble and a data part of the PPDU. | |
| | | | When a bit value of this field is 00, an indication value is 0, indicating zero TRN subfields. | |
| | | | | When the bit value of this field is 01, a corresponding decimal value 1 indicates one TRN subfield, that is, the indication value is 1. |
| | | | | When the bit value of this field is 10, a corresponding decimal value 2 indicates two TRN subfields, that is, the indication value is 2. |
| | | | | When the bit value of this field is 11, a corresponding decimal value 3 indicates four TRN subfields, that is, the indication value is 4. |
| | | | When the PPDU is the EDMG BRP-RX PPDU, this field is reserved. | |
| EDMG TRN-unit M | 4 | 82 | When the PPDU is the EDMG BRP-TX PPDU, this field plus 1 indicates a quantity of last M TRN subfields in one TRN unit, and within the M TRN subfields, a sending direction may be changed for every N TRN subfields. M and N are positive integers. When the PPDU is the EDMG BRP-RX/TX PPDU, this field plus 1 indicates a quantity of TRN subfields, in one TRN unit, that is sent by using a same AWV and that follows a potential AWV change. For example, a bit value of this field is 0000, a corresponding decimal value is 0, and an indication value is 1, indicating one TRN subfield. | |
| | | | For another example, a bit value of this field is 1111, a corresponding decimal value is 15, and an indication value is 16 (15+1), indicating 16 TRN subfields. | |
| | | | Therefore, the indication value of this field ranges from 1 to 16. | |
| | | | When the PPDU is the EDMG BRP-RX PPDU, this field is reserved. | |
| EDMG TRN-unit N | 2 | 86 | When the PPDU is the EDMG BRP-TX PPDU, this field indicates a quantity of TRN subfields that is in EDMG TRN-unit M TRN subfields (corresponding to the description in the previous row in Table 1) and that is sent by using a same AWV, where 0 indicates one TRN subfield; | |
| | | | | 1 indicates two TRN subfields; |
| | | | | 2 indicates three TRN subfields when a value of EDMG TRN-unit M is 2, 5, 8, 11, or 14, where if the value of EDMG TRN-unit M is 7 or 15, an actual value is 8 or 16, indicating that every eight TRN subfields are sent in one direction; and |
| | | | | 3 indicates four TRN subfields. |
| | | | This field is reserved when the PPDU is the EDMG BRP-RX PPDU or the EDMG BRP-RX/TX PPDU. | |
| TRN subfield sequence length | 2 | 88 | When the PPDU is an EDMG SC mode PPDU, if the EDMG TRN length field is 0, this field is reserved. Otherwise, this field indicates a length of a Golay (Golay) sequence used in the TRN subfield in the TRN field, where | |
| | | | 0 indicates that a length of a normal sequence is *128*N_{CB}*; | |
| | | | | 1 indicates that a length of a long sequence is *256*N_{CB}*; |
| | | | | 2 indicates that a length of a short sequence is *64*N_{CB}*; and |
| | | | | 3 indicates reserved. |
| | | | *N_{CB}* is an integer indicating that a TRN transmission bandwidth is an integer multiple of contiguous 2.16 GHz channels. | |
| | | | When the PPDU is an EDMG OFDM mode PPDU, if the EDMG TRN length field is 0, this field is reserved. Otherwise, this field indicates a quantity of repetition basic TRN subfields in the TRN subfield in the sent TRN field, where | |
| | | | 0 indicates a normal TRN subfield that includes two repetition basic TRN subfields; | |
| | | | 1 indicates a long TRN subfield that includes four repetition basic TRN subfields; | |
| | | | 2 indicates a short TRN subfield that includes one repetition basic TRN subfield; and | |
| | | | 3 indicates reserved. | |
| ... | ... | ... | ... | |
| Reserved (reserved) | 10 | 102 | Reserved | |
| CRC | 16 | 102 | Header check sequence | |

A BRP is a beam refinement protocol (beam refinement protocol), RX is the receiver (receiver), TX is the transmitter (transmitter), and the CRC is cyclic redundancy check (cyclic redundancy check) code.

It can be learned from Table 1 that a maximum quantity of TRN subfields included in one TRN unit is indication value of the EDMG TRN-unit P field+indication value of the EDMG TRN-unit M field. A maximum indication value of the EDMG TRN-unit P field is 4, in other words, a maximum quantity of indicated TRN subfields is 4. A maximum indication value of the EDMG TRN-unit M field is 16, in other words, a maximum quantity of indicated TRN subfields is 16. Therefore, in the current 11ay protocol, one TRN unit includes a maximum of 20 TRN subfields. The TRN field in the 11ay protocol is mainly used to perform beam training. In multistatic sensing in the 11bf protocol, one sensing transmitter and a plurality of sensing receivers may jointly perform multistatic sensing. For example, the TRN unit includes the maximum of 20 TRN subfields. If a quantity of TRN subfields used by one sensing receiver to perform phase tracking in the TRN unit is 4, when a quantity of sensing receivers is greater than or equal to 5, there is no redundant TRN subfield used to perform a scanning sensing function. It is difficult to support implementation of the DMG multistatic sensing in 11bf.

### 4. Multistatic sensing in the 11bf protocol

In a multistatic sensing mode in the 11bf protocol, an AP may be used as a sensing initiator and a sensing transmitter, and a plurality of STAs are used as sensing responders and sensing receivers. Alternatively, an AP may be used as a sensing initiator and a sensing receiver, and a plurality of STAs may be used as sensing responders and sensing transmitters.

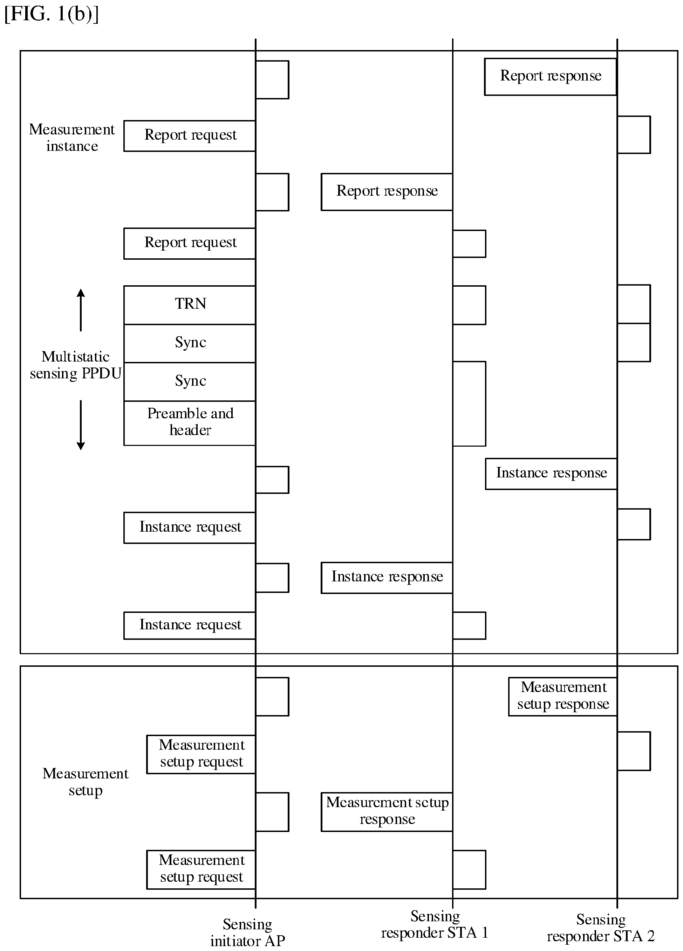

For a multistatic sensing procedure in the 11bf protocol, refer to FIG. 1(b). For example, the AP is the sensing initiator (sensing initiator), and a STA 1 and a STA 2 are sensing responders (sensing responders). The sensing procedure includes measurement setup (measurement setup) and measurement instance (measurement instance).

First, the measurement setup process is performed. The sensing initiator and the sensing responder complete confirmation of a device role, confirmation of a sensing type, sensing measurement parameter exchange, confirmation of a feedback type, and the like in a subsequent sensing process by using a measurement setup request (measurement setup request) and a measurement setup response (measurement setup response).

After the measurement setup is completed, one or more sensing instances exist, and negotiated sensing measurement parameters are used to perform sensing measurement feedback. FIG. 1 shows one sensing instance. The AP first interacts with the STA 1 and the STA 2 by using an instance request (instance request) and an instance response (instance response), to initialize a sensing instance (sensing instance). Then, the AP sends one or more multistatic sensing PPDUs to the STA 1 and the STA 2. The STA 1 and the STA 2 receive related PPDUs, and perform sensing.

The multistatic sensing PPDU shown in FIG. 1 includes at least one of a TRN field, a preamble and header (preamble and header) field, and a sync (sync) field.

In some cases, the multistatic sensing PPDU further includes a physical layer service data unit (PHY service data unit, PSDU).

In the sensing instance, an optional feedback phase exists, and the STA 1 and the STA 2 may feed back sensing results to the AP (if no feedback phase exists in the current instance, feedback may alternatively be performed in a next/subsequent instance). For example, in FIG. 1, the AP sends a report request (report request) to the STA 1 and the STA 2, to request to obtain the sensing results. The STA 1 and the STA 2 send report (report) responses to the AP, to feed back the sensing results.

It should be noted that related information exchange between the AP, and the STA 1 and the STA 2 may be carried in the measurement setup request/response, the instance request/response, or a header of the PPDU according to a set principle.

For example, in one measurement setup process, some unchanged parameters and information may be exchanged by using the measurement setup request/response, and some changed information may be exchanged by using the instance request/response.

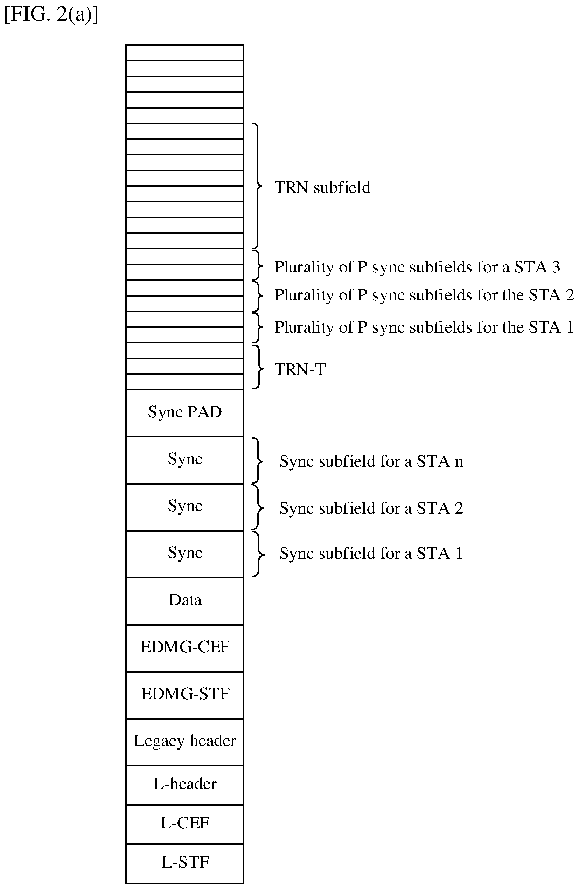

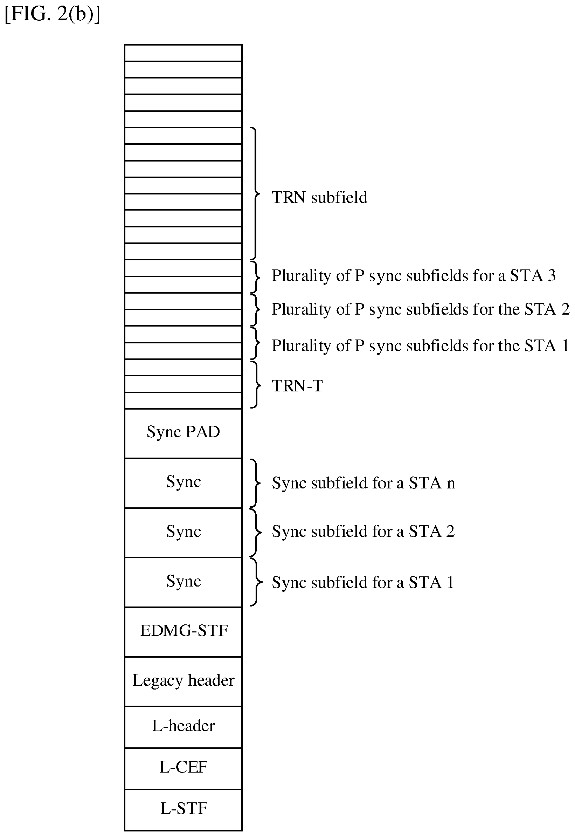

Structures of multistatic sensing PPDUs that are being discussed in the current 11bf protocol are shown in FIG. 2(a) and FIG. 2(b). In the structure of the PPDU shown in FIG. 2(a), the PPDU includes a legacy short training field (legacy short training field, L-STF), used to perform synchronization; a legacy channel estimation field (legacy channel estimation field, L-CEF), used to perform channel estimation; a legacy header (legacy header, L-header) that is a header of the PPDU and that may be used to carry signaling at a physical layer; an EDMG header A, used to carry physical layer related signaling of an EDMG; an EDMG-STF, used to perform functions such as channel synchronization and automatic gain control; an EDMG-CEF, used to perform channel estimation; a data field that is a data part; three sync fields, including a sync field for the STA 1 (sync field for the STA 1), a sync field for the STA 2 (sync field for the STA 2), and a sync field for a STA n (sync field for a STA n) (it is assumed that there are n STAs); sync PAD (sync PAD) (padding) that indicates synchronous padding, where all sync fields may be padded to integer multiples of a TRN unit; a TRN-T field that is located between the data part and a TRN field and that is used for transition of device adjustment; and a P sync subfield for a plurality of STAs (P sync subfield for a plurality of STAs), used to perform phase tracking, where a function of the P sync subfield for a plurality of STAs is equivalent to a plurality of TRN subfields indicated by an EDMG TRN-unit P field in the 11ay protocol. For example, a plurality of P sync subfields for the STA 1, a plurality of P sync subfields for the STA 2, and a plurality of P sync subfields for a STA 3 are shown in FIG. 2(a). A plurality of subsequent TRN subfields are used to perform scanning sensing (in this case, the AP is the sensing transmitter, and the plurality of STAs are the sensing receivers). A function of the plurality of subsequent TRN subfields is similar to that of a plurality of TRN subfields (but used to perform scanning sensing in 11bf) indicated by an EDMG TRN-unit M field in the 11ay protocol.

A plurality of fields that are the same as those in the PPDU structure shown in FIG. 2(a) exist in the PPDU structure shown in FIG. 2(b). In comparison with the PPDU structure shown in FIG. 2(a), the PPDU structure shown in FIG. 2(b) does not include the EDMG-CEF and the data field.

In the 11bf protocol, the sensing receiver may perform phase tracking and/or time-frequency synchronization by using the foregoing P sync subfield.

A plurality of TRN subfields following the P sync subfield may be used to perform scanning sensing. In this case, the sensing transmitter may send the TRN subfields in different directions, and the sensing receiver may implement sensing by receiving echoes in different directions.

It can be found that a main difference between the structure of the PPDU shown in FIG. 2(a) and the structure of the PPDU shown in FIG. 2(b) lies in a start phase of the TRN field in the PPDU. Except for a start location of the TRN field, the two structures have a similar structure:

The entire PPDU includes a plurality of groups of P sync subfields;
each group of P sync subfields include the plurality of TRN subfields that are indicated by the EDMG TRN-unit P field and that are used to be sent to a same STA to implement a function like the phase tracking; and
there are a plurality of TRN subfields that follow the plurality of groups of P sync subfields and that are used to perform target sensing/scanning sensing.

To maintain compatibility between the 11bf protocol and the 11ay protocol, the 11bf protocol mainly uses a TRN parameter in the 11ay protocol to indicate the TRN field. As shown in Table 1, the TRN unit includes the maximum of 20 TRN subfields. This is potentially insufficient for a plurality of devices in the multistatic sensing. Table 2 shows parameter analysis of a TRN subfield in a multi-device scenario.

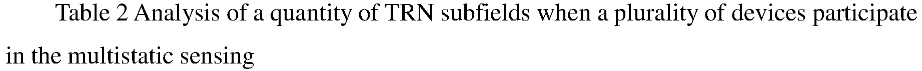

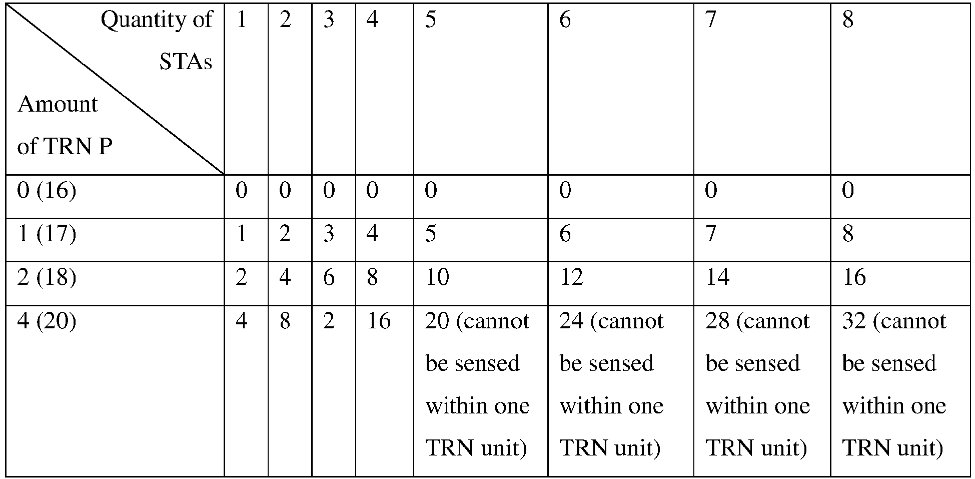

The amount of TRN P in Table 2 indicates that an indication value of the EDMG TRN-unit P field may be 0, 1, 2, or 4, and 16, 17, 18, and 20 in the following brackets may be understood as quantities of TRN subfields included in the TRN unit when the EDMG TRN-unit M field indicates 16 TRN subfields. It may be learned that the TRN unit includes the maximum of 20 TRN subfields. When five STAs participate in the multistatic sensing, and the indication value of the EDMG TRN-unit P field is 4, each STA has four TRN subfields used to perform phase tracking, and 20 TRN subfields (five groups, where four TRN subfields are in each group) are required to implement functions such as the phase tracking (phase tracking) and the synchronization for the five STAs. There is no redundant TRN subfield that is in the TRN unit and that is used by the STA to perform target sensing. Certainly, when there are more than five STAs, and the value of the TRN-unit P field is 4, target sensing cannot be performed.

In this way, when the 11bf protocol continues to use a repetition unit (TRN unit) in the TRN field and an information exchange manner that are in the 11ay protocol, and a plurality of sensing receivers participate in the multistatic sensing, phase tracking and scanning sensing of all sensing receivers cannot be implemented in one TRN unit, and implementation of the multistatic sensing is affected.

Therefore, this application provides a sensing method, and mainly provides a corresponding solution to an information exchange problem of the TRN field in the multistatic sensing, to ensure the implementation of the multistatic sensing. In other words, when a quantity of devices (sensing receivers) participating in the multistatic sensing is large, a TRN subfield included in one TRN unit in the 11ay protocol cannot implement phase tracking and target sensing. This application implements multistatic sensing based on the TRN field in the current 11ay protocol.

In the sensing method according to this application, for a case in which a single TRN unit cannot complete TRN field information exchange in the multistatic sensing PPDU when the quantity of devices is large and the indication value of the EDMG TRN-unit P field is large, a format of a first training unit in the TRN field may be indicated by using indication information. A length of the first training unit is longer than a length of a second training unit. The second training unit may be understood as a TRN unit in the 11ay protocol. Alternatively, in this application, the TRN field information exchange in the multistatic sensing may be implemented in a plurality of manners like adding a related rule.

It should be noted that, for an implementation in which the format of the first training unit is indicated by using the indication information, in the two structures shown in FIG. 2(a) and FIG. 2(b), the sync field (for example, the foregoing sync field for the STA n) may belong to the TRN field, or may belong to the PSDU field before the sync field. The TRN field in this application may be understood as a TRN field starting from the TRN-T field in the PPDU.

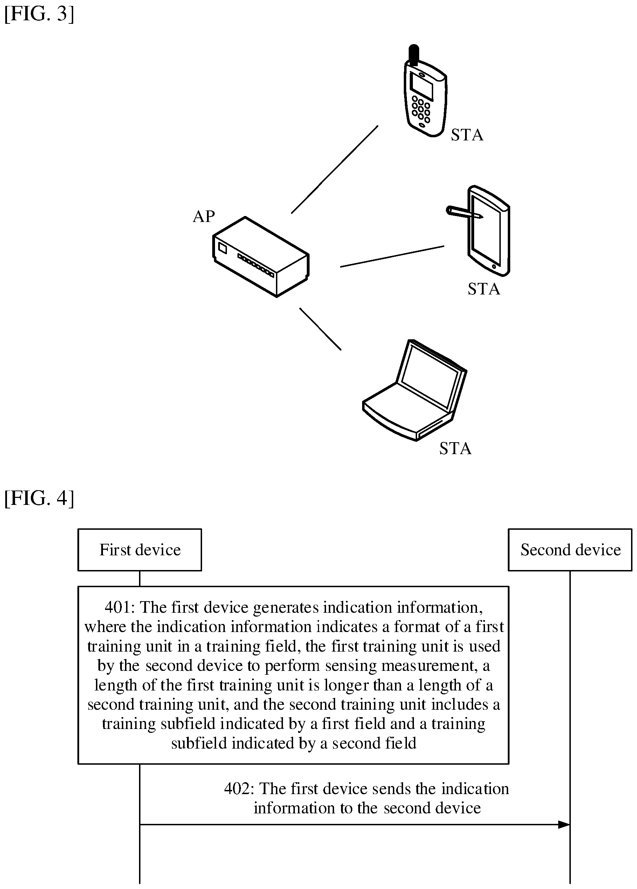

The sensing method according to this application may be applied to a scenario in which a sensing transmitter and a plurality of sensing receivers perform multistatic sensing in WLAN sensing. A network architecture includes the sensing transmitter and the plurality of sensing receivers. For example, as shown in FIG. 3, the sensing transmitter is an AP, and the sensing receivers are STAs.

As described above, this application is described by using an example in which the sensing initiator is the sensing transmitter and the sensing responder is the sensing receiver. When the sensing initiator is the sensing receiver, and the sensing responder is the sensing transmitter, the indication information in this application is sent by the sensing initiator/sensing receiver, and the multistatic sensing PPDU is sent by the sensing responder/sensing transmitter. In other words, the sensing initiator/sensing receiver indicates a structure of the TRN field in the to-be-sent multistatic sensing PPDU to the sensing responder/sensing transmitter.

A STA is a terminal, for example, a handheld device or an in-vehicle device with a wireless connection function, connected to a wireless network. For example, common terminals include a mobile phone, a tablet computer, a notebook computer, a palmtop computer, a mobile internet device (mobile Internet device, MID), and a wearable device like a smartwatch, a smart band, or a pedometer. An AP is usually translated as a "wireless access node" or a "bridge". The AP is used as a bridge between a wireless station and a wired local area network at a media access control (medium access control, MAC) layer.

Based on the foregoing application scenario and network architecture, the following first describes a method for indicating a format of a first training unit based on indication information according to this application.

As shown in FIG. 4, this application provides a sensing method. The method includes the following steps.

401: A first device generates indication information, where the indication information indicates a format of a first training unit in a training field, the first training unit is used by a second device to perform sensing measurement, a length of the first training unit is longer than a length of a second training unit, and the second training unit includes a training subfield indicated by a first field and a training subfield indicated by a second field.

Correspondingly, the second device receives the indication information.

In some embodiments, the first device is, for example, a sensing initiator/sensing transmitter, or another device that sends an indication other than the sensing initiator/sensing transmitter. In this case, the second device is a sensing responder/sensing receiver.

The training subfield may be understood as a TRN subfield in this application. The training subfield is a subfield in a TRN unit in a TRN field that is the training field, and may be specifically a TRN subfield in a TRN field in a multistatic sensing PPDU.

The second training unit may be understood as one TRN unit in the foregoing description. The second training unit includes a TRN subfield indicated by the first field EDMG TRN-unit P and a TRN subfield indicated by the second field EDMG TRN-unit M.

The indication information indicates that the length of the first training unit is longer than the length of the second training unit. It is equivalent to that the indication information indicates that a repetition unit in the TRN field is the first training unit, that is, is a structure obtained after the TRN unit is lengthened.

For example, the indication information indicates that the first training unit includes at least two TRN units. It is equivalent to combining TRN subfields in at least two TRN units. In this case, the first training unit in the TRN field may be the TRN subfields in the at least two TRN units.

Alternatively, the first training unit includes a TRN subfield in a single TRN unit and a plurality of TRN subfields outside the TRN unit. In this case, the first training unit in the TRN field includes the TRN subfield in the TRN unit and the plurality of TRN subfields outside the TRN unit.

In this way, in multistatic sensing, when a quantity of sensing responders/sensing receivers is large, if the TRN subfield in the single TRN unit cannot implement phase tracking and target sensing, a repetition unit in a TRN field in a multistatic sensing PPDU of one sensing instance may be updated to the first training unit to be used by a plurality of sensing responders/sensing receivers to perform phase tracking and scanning sensing.

It may also be understood that the first training unit includes a first training subfield and/or a second training subfield, the first training subfield is used to perform phase tracking, and the second training subfield is used to perform scanning sensing.

It should be noted that the first training unit includes the first training subfield and/or the second training subfield may be understood that the first training unit includes at least one first training subfield and/or at least one second training subfield.

It should be further noted that when the first training unit is indicated in this application, an indication value of the related first field EDMG TRN-unit P may be an indication value of EDMG TRN-unit P in the 11ay protocol. In the 11bf protocol, an indication value of a single first field EDMG TRN-unit P may alternatively be another value, for example, the indication value of EDMG TRN-unit P in the 11ay protocol is increased.

Similarly, an indication value of the second field EDMG TRN-unit M in this application may be an indication value of EDMG TRN-unit M in the 11ay protocol. In the 11bf protocol, an indication value of a single first field EDMG TRN-unit M may alternatively be another value, for example, the indication value of EDMG TRN-unit M in the 11ay protocol is increased.

402: The first device sends the indication information to the second device.

Correspondingly, the second device may interpret the first training unit based on the indication information.

It can be learned from the foregoing that, in a typical sensing procedure in the 11bf protocol, a measurement setup process needs to be performed first, and the sensing transmitter and the sensing receiver complete confirmation of a device role, confirmation of sensing measurement parameter exchange, and the like in a subsequent sensing process by using a measurement setup request/response. After the measurement setup process is completed, one or more sensing instances exist, and a parameter of a signal is used to perform sensing measurement feedback.

For example, in a manner 1, the indication information according to this application may occur in the measurement setup process. For example, the indication information is carried in the measurement setup request (sensing measurement setup request) and a measurement setup response (sensing measurement setup response), to complete indication information exchange.

Alternatively, in a manner 2, an indication of the indication information may occur at the beginning of the measurement instance process. For example, the indication information is carried in an instance request and an instance response, to complete indication information exchange. The instance request may also be referred to as a multistatic sensing request, a multistatic sensing instance request, a sensing instance request, or the like. The instance response may also be referred to as a multistatic sensing response, a multistatic sensing instance response, a sensing instance response, or the like.

Alternatively, in a manner 3, the indication information may be carried in some reserved bits in a header of the multistatic sensing PPDU.

Certainly, the foregoing three carrying manners are not limited in this application, and this may alternatively be implemented in another manner. This is not limited in this application.

Therefore, in this application, the indication information is sent to the sensing responder/sensing receiver in a multistatic sensing process, to indicate that the format of the first training unit is used by the second device to perform sensing measurement, and the length of the first training unit is longer than the length of the second training unit. It is equivalent to that a length of the repetition unit in the TRN field is increased by increasing a quantity of TRN subfields, to implement multistatic sensing. For example, when the quantity of sensing responders/sensing receivers is large, or the value of the EDMG TRN-unit P field is large, it can be ensured that a parameter of the TRN field is correctly transferred during TRN parameter exchange in a multistatic sensing mode, and the implementation of the multistatic sensing is ensured.

The following describes a plurality of implementations of the indication information by using examples.

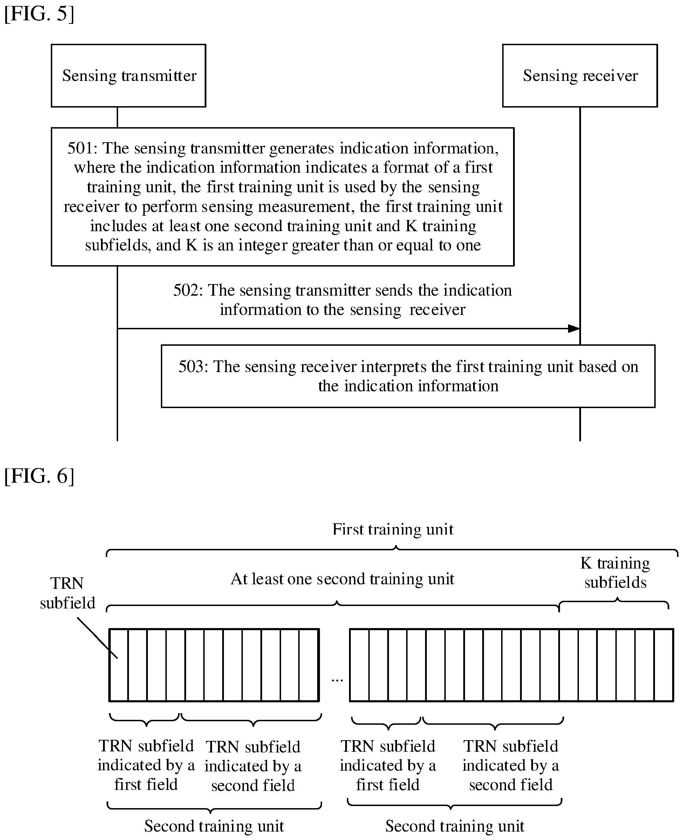

An embodiment of this application further provides a sensing method. As shown in FIG. 5, an example in which a first device is a sensing initiator, the sensing initiator is a sensing transmitter, a second device is a sensing responder, and the sensing responder is a sensing receiver is used. The method includes the following steps.

501: The sensing transmitter generates indication information, where the indication information indicates a format of a first training unit, the first training unit is used by the sensing receiver to perform sensing measurement, the first training unit includes at least one second training unit and K training subfields, and K is an integer greater than or equal to one.

The second training unit may be understood as a TRN unit in this application, and a single TRN unit includes a plurality of TRN subfields.

In some embodiments, the second training unit, namely, the TRN unit, includes a TRN subfield indicated by a first field EDMG TRN-unit P and/or a TRN subfield indicated by a second field EDMG TRN-unit M.

In some embodiments, the indication information is equivalent to indicating a repetition unit, namely, a structure of the first training unit, in a TRN field in a multistatic sensing scenario. Some TRN subfields in the first training unit may be used to perform phase tracking, and some TRN subfields may be used to perform scanning sensing.

For example, the indication information may be an additional EDMG TRN-unit M field that may be implemented by using reserved bits, or may be implemented by reusing some bits, and that indicates a format/structure of a first training unit in a TRN field in a multistatic sensing PPDU.

It should be understood that the additional EDMG TRN-unit M field not only indicates that the sensing receiver learns of the format of the first training unit, that is, a format obtained after the at least one second training unit and the K training subfields are combined, but also indicates a value of K of the K TRN subfields.

In some embodiments, the K training subfields are K training subfields immediately following the training subfield indicated by the second field. As shown in FIG. 6, for example, the K training subfields may be K training subfields following a training subfield indicated by a second field in a last second training unit in the at least one second training unit.

Certainly, the K training subfields may alternatively immediately follow a training subfield indicated by a second field in any second training unit in the at least one second training unit.

Alternatively, the K training subfields immediately follow a training subfield indicated by a second field in each of the at least one second training unit. This is not limited in this application.

For example, when at least one training unit is the single TRN unit, it is equivalent to that the K TRN subfields start to be added to a first TRN subfield following a last TRN subfield in the single TRN unit. In other words, a first TRN subfield in the K TRN subfields is the first TRN subfield following the last TRN subfield in the TRN unit.

For example, that the at least one training unit is one TRN unit is used as an example. For a meaning of the additional EDMG TRN-unit M field, refer to an example in Table 3. It is assumed that the additional EDMG TRN-unit M field occupies 3 bits. The second training unit is one TRN unit.

**Table 3 Example of the meaning of the additional EDMG TRN-unit M field**

| Additional EDMG TRN-unit M (3 bits) | Field meaning |
|---|---|
| 000 | The first training unit in the TRN field is indicated as one second training unit, in other words, a length of the first training unit is one TRN unit. That is, the single TRN unit is interpreted, where K=0. |
| 001 | K=1 indicates that the first training unit in the TRN field is a combination of one TRN unit and one TRN subfield. |
| | The first training unit in the TRN field in the multistatic sensing PPDU includes indication value of EDMG TRN-unit P+indication value of EDMG TRN-unit M+one TRN subfield. |
| | It is assumed that in the foregoing described indication value of EDMG TRN-unit P+indication value of EDMG TRN-unit M+one TRN subfield, indication value of EDMG TRN-unit P*H (H is a quantity of STAs participating in multistatic sensing) is used by the H devices to perform phase tracking. Another remaining TRN subfield in the first training unit is used to perform scanning sensing. H is a positive integer. |
| 010 | K=2 indicates that the first training unit in the TRN field is a combination of one TRN unit and two TRN subfields. |
| | A repetition unit in the TRN field in the multistatic sensing PPDU includes indication value of EDMG TRN-unit P+indication value of EDMG TRN-unit M+two TRN subfields. |
| | It is assumed that in the foregoing described indication value of EDMG TRN-unit P+indication value of EDMG TRN-unit M+two TRN subfields, indication value of EDMG TRN-unit P*H (H is a quantity of STAs participating in multistatic sensing) is used by the H devices to perform phase tracking. Another remaining TRN subfield in the repetition unit is used to perform scanning sensing. H is a positive integer. |
| More bits may be obtained through extension | Further extension may be performed. |

More bits may be obtained through extension.

It should be noted that the K training subfields in this application may alternatively be K training subfields immediately following the training subfield indicated by the first field.

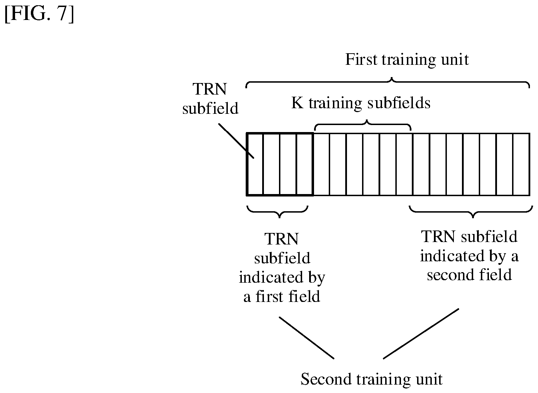

In this case, a field of the indication information may be, for example, additional EDMG TRN-unit P. It is assumed that the at least one second training unit is one TRN unit. As shown in FIG. 7, it is equivalent to that the K TRN subfields are added after a plurality of TRN subfields indicated by the indication value of the first field EDMG TRN-unit P.

For a meaning of the additional EDMG TRN-unit P field, refer to the example description in Table 3.

Similarly, the K training subfields may be K training subfields following a training subfield indicated by a first field in a last second training unit in the at least one second training unit.

The K training subfields may alternatively immediately follow a training subfield indicated by a first field in any second training unit in the at least one second training unit.

Alternatively, the K training subfields immediately follow a training subfield indicated by a first field in each of the at least one second training unit. This is not limited in this application.

However, regardless of TRN subfields, indicated by fields, to which the K TRN subfields indicated by the indication information are added, when at least one TRN unit and the K TRN subfields are jointly interpreted, some TRN subfields in a plurality of combined TRN subfields may be used to perform phase tracking, and some TRN subfields may be used to perform scanning sensing.

In some embodiments, the K TRN subfields added in this application may be an increase of an integer multiple or an increase of a non-integral multiple of the indication value of EDMG TRN-unit P or the indication value of EDMG TRN-unit M.

In some embodiments, the second training unit and the K training subfields jointly form the first training unit in this application, and the following condition needs to be met:

indication value of EDMG TRN-unit M+indication value of EDMG TRN-unit P+K≥N_{STA}*indication value of EDMG TRN-unit P, where N_{STA} indicates a quantity of sensing responders.

In other words, a quantity of TRN subfields in the first training unit needs to at least meet that the N_{STA} sensing responders complete phase tracking.

In this case, setting of the second field EDMG TRN-unit M needs to meet the following condition:

indication value of EDMG TRN-unit M≥(N_{STA}-1)*indication value of EDMG TRN-unit P-K.

In some embodiments, when determining that at least one of the following two conditions is met, the sensing transmitter generates the indication information. The two conditions include:
(1) A quantity of sensing receivers participating in the sensing measurement is greater than or equal to a first preset quantity; and
(2) a quantity of training subfields indicated by the first field is greater than or equal to a second preset quantity.

For the condition (1), for example, it is assumed that one second training unit TRN unit includes 20 TRN subfields. The first field EDMG TRN-unit P indicates that each STA occupies four TRN subfields, and the second field EDMG TRN-unit M indicates that there are 16 TRN subfields. If the quantity of sensing receivers is greater than or equal to five (the first preset quantity), there is no redundant TRN subfield that is in the TRN unit and that is used by the sensing receiver to perform scanning sensing. The sensing transmitter needs to generate the indication information to indicate the format of the first training unit.

Certainly, an example in which the first preset quantity is five is used for example description, and the first preset quantity may alternatively be another value. For example, the first field EDMG TRN-unit P indicates that each STA occupies four TRN subfields, the second field EDMG TRN-unit M indicates that there are 16 TRN subfields, and the quantity of sensing receivers is four (the first preset quantity). When a single second training unit TRN unit has four remaining TRN subfields used by the four sensing receivers to perform scanning sensing, it may also be considered that the condition (1) is met, and the format of the first training unit may be indicated. For example, the first training unit includes two TRN units. In this case, 24 remaining TRN subfields in the first training unit may be used by the four sensing receivers to perform scanning sensing, thereby effectively improving sensing efficiency.

For the condition (2), the first training subfield may be understood as a TRN subfield used to perform phase tracking in this application. For example, it is assumed that the second training unit TRN unit includes 20 TRN subfields. The second field EDMG TRN-unit M indicates that there are 16 TRN subfields. If the quantity of sensing receivers is greater than or equal to five, the first field EDMG TRN-unit P indicates that each STA occupies four TRN subfields (the second preset quantity), there is no redundant TRN subfield that is in the TRN unit and that is used by the sensing receiver to perform scanning sensing. The sensing transmitter needs to generate the indication information, to indicate the format of the first training unit.

Similar to the example of the condition (1), the second preset quantity may alternatively be another value. For example, the second training unit TRN unit includes 18 TRN subfields, and the second field EDMG TRN-unit M indicates that there are 16 TRN subfields. If the first field EDMG TRN-unit P indicates that each STA occupies two TRN subfields (the second preset quantity), and if the quantity of sensing receivers is five, when the second training unit TRN unit has eight remaining TRN subfields used by the five sensing receivers to perform scanning sensing, it may also be considered that the condition (2) is met, and the format of the first training unit may be indicated. For example, the first training unit includes two TRN units. In this case, 26 remaining TRN subfields in the first training unit may be used by the five sensing receivers to perform scanning sensing, thereby effectively improving sensing efficiency.

502: The sensing transmitter sends the indication information to the sensing receiver.

Correspondingly, the sensing receiver receives the indication information sent by the sensing transmitter.

In the manner 1 described in step 402, when sending the indication information occurs in the measurement setup process, for example, the indication information is carried by using the measurement setup request, it may be specifically understood that additional EDMG TRN-unit M is carried in a DMG sensing measurement setup element.

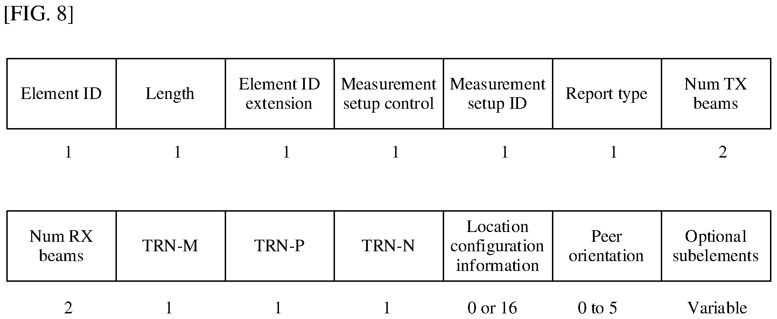

A diagram of a structure of the DMG sensing measurement setup element in the 11bf protocol is shown in FIG. 8. Included fields include an element ID (element ID) field, a length (length) field, an element ID extension (element ID extension) field, a measurement setup control (measurement setup control) field, a measurement setup ID (measurement setup ID) field, a report type (report type) field, a num TX beams (num TX beams) field, a num RX beams (num RX beams) field, a TRN-M field, a TRN-P field, a TRN-N field, a location configuration information (location configuration information, LCI) field, a peer orientation/peer direction/point direction/point orientation (peer orientation) field, an optional subelements (optional subelements) field, and the like. FIG. 6 further shows a quantity of bits occupied by each field, in a unit of octets (a quantity of 8 bits or a quantity of bytes).

In some embodiments, the additional EDMG TRN-unit M field (or the additional EDMG TRN-unit P field) in this application may be located after the TRN-N field. Certainly, the additional EDMG TRN-unit M field (or the additional EDMG TRN-unit P field) may alternatively be located in another location in the DMG sensing measurement setup element. This is not limited in this application.

It should be noted that in the diagram of the structure shown in FIG. 8, the TRN-P field is an EDMG-TRN-P field, indicating a quantity of TRN subfields used to perform phase tracking; the TRN-M field is an EDMG-TRN-M field, indicating a quantity of TRN subfields used to perform target sensing; and the TRN-N field is an EDMG-TRN-N field, indicating a quantity of TRN subfields that are in TRN subfields whose quantity is equal to an indication value of EDMG-TRN-M and that are sent by using a same AWV.

A function of the TRN-M field is similar to that of the EDMG TRN-unit M field in the 11ay protocol, a function of the TRN-P field is similar to that of the EDMG TRN-unit P field in the 11ay protocol, and a function of the TRN-N field is similar to that of the EDMG TRN-unit N field in the 11ay protocol.

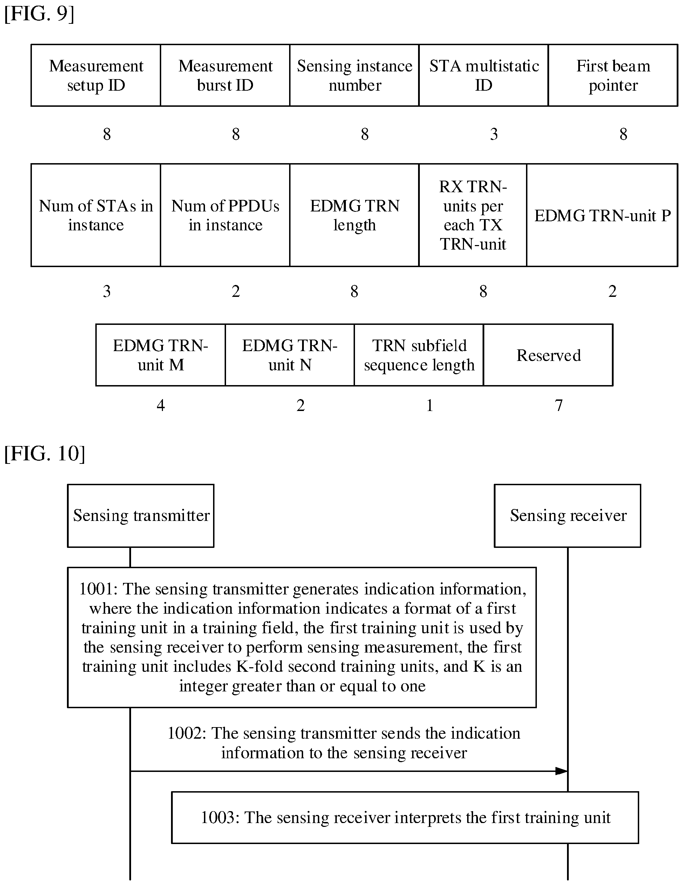

In the manner 2 described in step 402, when sending the indication information occurs in the measurement instance process, for example, the indication information is carried in the instance request, it may be specifically understood that the additional EDMG TRN-unit M is carried in a DMG multistatic sensing request. FIG. 9 shows an example of a time division duplexing (time division duplexing, TDD) beamforming information field format (beamforming information field format) of the DMG multistatic sensing request.

As shown in FIG. 9, the TDD beamforming information field format includes a measurement setup ID (measurement setup ID) field, a measurement burst ID (measurement burst ID) field, a sensing instance number (sensing instance number) field, a STA multistatic ID (STA multistatic ID) field, a first beam pointer/index (first beam index) field, a num of STAs in instance (num of STAs in instance) field, a num of PPDUs in instance (num of PPDUs in instance) field, an EDMG TRN length (EDMG TRN length) field, an RX TRN-units per each TX TRN-unit (RX TRN-units per each TX TRN-unit) field, an EDMG TRN-unit P field, an EDMG TRN-unit M field, an EDMG TRN-unit N field, a TRN subfield sequence length (TRN subfield sequence length) field, and a reserved (reserved) field. Bits occupied by the additional EDMG TRN-unit M field in this application may be bits in the reserved field. Alternatively, the additional EDMG TRN-unit M field may occupy bits in another field in the TDD beamforming information field format. This is not limited in this application. FIG. 9 further shows a quantity of bits occupied by each field, in a unit of bits (a quantity of bits).

In the manner 3 described in step 402, when the indication information is carried by the some reserved bits in the header of the multistatic sensing PPDU, the additional EDMG TRN-unit M may be included in an EDMG-header-A field, namely, the reserved field shown in Table 1, of the multistatic sensing PPDU.

It should be noted that the EDMG-header-A field in Table 1 is an example of a header of an SC/OFDM mode SU PPDU in the 11ay protocol. In addition to an SC/OFDM mode, the 11ay protocol further has a control mode. In 11ay, one reserved bit (B7) exists in an EDMG-header-A2 field in a control mode PPDU, and the reserved bit (B7) may be used to implement the indication information in embodiments of this application (for example, the reserved bit (B7) may be extended to two TRN units for joint interpretation). If further extension is required, another bit in the EDMG-header-A2 field may be reused for joint indication.

503: The sensing receiver interprets the first training unit based on the indication information.

Because the sensing receiver determines a sequence number of the sensing receiver by using the measurement setup process, when the sensing receiver determines that the first training unit needs to be interpreted, a sequence number of a TRN subfield indicated by the TRN-P field and a sequence number of a TRN subfield indicated by the TRN-M field may be determined based on the sequence number of the sensing receiver.

For example, the at least one second training unit is specifically one TRN unit. It is assumed that an AP performs measurement setup with eight STAs. A sequence number of an eighth STA is 8, and one TRN unit includes 20 TRN subfields. If each STA occupies four TRN subfields, to perform phase tracking, and K=20, the indication information indicates that the single TRN unit and the 20 TRN subfields jointly form the first training unit. In this case, the eighth STA determines that 29^{th} to 32^{nd} TRN subfields in 40 jointly interpreted TRN subfields are used by the eighth STA to perform phase tracking, and remaining 33^{rd} to 40^{th} TRN subfields are used by the eight STAs to perform target sensing.

Therefore, in this application, the first training unit may be flexibly selected as the repetition unit in the TRN field by using the additional EDMG TRN-unit M field (or the additional EDMG TRN-unit P field), and the single TRN unit is not used as a minimum unit. TRN parameter exchange in DMG multistatic sensing is implemented, to ensure implementation of the multistatic sensing.

FIG. 10 shows a sensing method according to an embodiment of this application. An example in which a first device is a sensing initiator, the sensing initiator is a sensing transmitter, a second device is a sensing responder, and the sensing responder is a sensing receiver is used. The method includes the following steps.

1001: The sensing transmitter generates indication information, where the indication information indicates a format of a first training unit in a training field, the first training unit is used by the sensing receiver to perform sensing measurement, the first training unit includes K-fold second training units, and K is an integer greater than or equal to one.

In some embodiments, the second training unit TRN unit includes a TRN subfield indicated by a first field EDMG TRN-unit P and a TRN subfield indicated by a second field EDMG TRN-unit M.

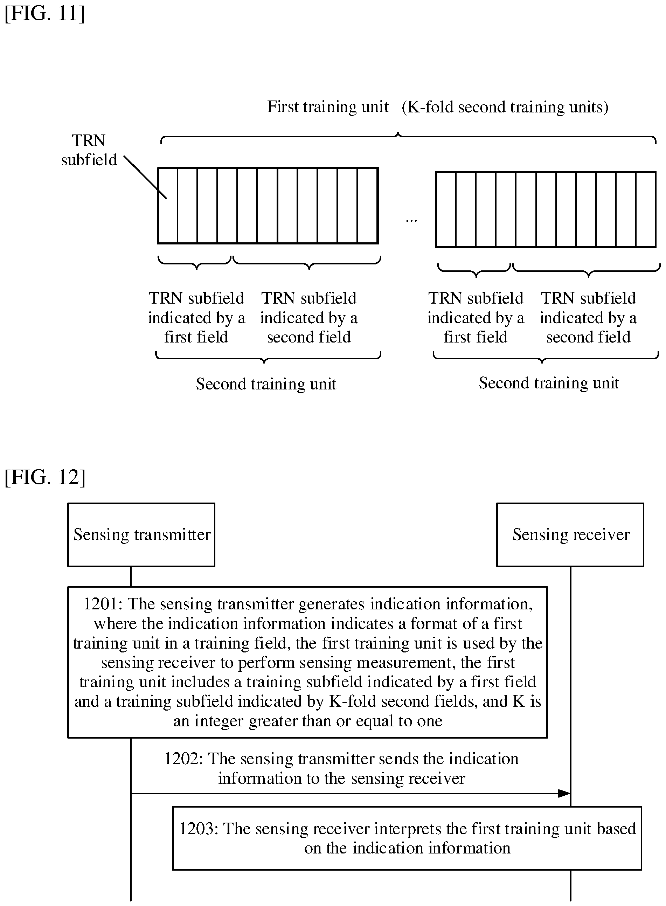

As shown in FIG. 11, when the sensing receiver interprets the first training unit, in TRN subfields in the K-fold second training units included in the first training unit, some TRN subfields are first training subfields used to perform phase tracking, and some TRN subfields are second training subfields used to perform scanning sensing.

In some embodiments, the indication information is, for example, a TRN unit combination field (TRN unit combination field); may be implemented by using some reserved bits, or may be implemented by reusing some bits; and indicates joint interpretation of second training units TRN units in a multistatic sensing PPDU.

For example, for a meaning of the TRN unit combination field, refer to an example in Table 4. The TRN unit combination field occupies 2 bits, and indicates separate interpretation of each TRN unit or joint interpretation of two or more TRN units.

**Table 4**

| (TRN unit combination field) 2 bits | Joint interpretation of the TRN units |
|---|---|
| 00 | A single second training unit TRN unit is interpreted (in other words, the first training unit (repetition unit) in the TRN field includes TRN subfields whose quantity is equal to indication value of EDMG TRN-unit P+indication value of EDMG TRN-unit M). |
| 01 | First training units in the TRN field are two TRN units. |
| | In other words, the first training units in the TRN field include TRN subfields whose quantity is equal to 2*(indication value of EDMG TRN-unit P+indication value of EDMG TRN-unit M). |
| | When the indication value of EDMG TRN-unit P is equal to 4, the indication value of EDMG TRN-unit M is equal to 16, and there are H devices, TRN subfields whose quantity is equal to (2*(indication value of EDMG TRN-unit P+indication value of EDMG TRN-unit M)-H*indication value of EDMG TRN-unit P) may be used to perform scanning sensing/target sensing, and K is an integer greater than or equal to one. |
| 10 | First training units in the TRN field are three TRN units. |
| | In other words, the first training units in the TRN field include TRN subfields whose quantity is equal to 3*(indication value of EDMG TRN-unit P+indication value of EDMG TRN-unit M). |
| | When the indication value of EDMG TRN-unit P is equal to 4, the indication value of EDMG TRN-unit M is equal to 16, and there are H devices, TRN subfields whose quantity is equal to (3*(indication value of EDMG TRN-unit P+indication value of EDMG TRN-unit M)-H*indication value of EDMG TRN-unit P) may be used to perform scanning sensing/target sensing. |
| 11 | Reserved (extensible) |

When a bit value of the TRN unit combination field is "00", it means that the first training unit in the TRN field is one second training unit TRN unit. For example, it is assumed that a single TRN unit includes 20 TRN subfields (the EDMG TRN-unit P field indicates four TRN subfields, and the EDMG TRN-unit M field indicates 16 TRN subfields). If a quantity of STAs is less than five, in addition to a TRN subfield used to perform phase tracking, there is a remaining TRN subfield used to perform target sensing in the 20 TRN subfields included in the single TRN unit.

When a bit value of the TRN unit combination field is "01", it may indicate that the first training units in the TRN field are two second training units TRN units. When performing sensing measurement, the sensing responder needs to jointly interpret the two TRN units. It is assumed that a single TRN unit includes 20 TRN subfields (the EDMG TRN-unit P field indicates four TRN subfields, and the EDMG TRN-unit M field indicates 16 TRN subfields). In this case, in a TRN field in the multistatic sensing PPDU, 40 TRN subfields may be used at a time as first training units in the TRN field to perform sensing measurement for a plurality of STAs. For example, the EDMG TRN-unit P field indicates that each STA occupies four TRN subfields, and the EDMG TRN-unit M field indicates that each STA occupies 16 TRN subfields. In this case, eight STAs occupy 32 TRN subfields to perform phase tracking, and the remaining eight TRN subfields are used by the eight STAs to perform target sensing.

When a bit value of the TRN unit combination field is "10", it may indicate that the first training units in the TRN field are three second training units TRN units. When performing sensing measurement, the sensing responder needs to jointly interpret the three TRN units. It is assumed that a single TRN unit includes 20 TRN subfields. In this case, in a TRN field in the multistatic sensing PPDU, 60 TRN subfields may be used at a time to perform sensing measurement for a plurality of STAs. For example, the EDMG TRN-unit P field indicates that each STA occupies four TRN subfields, and the EDMG TRN-unit M field indicates that each STA occupies 16 TRN subfields. In this case, eight STAs occupy 32 TRN subfields to perform phase tracking, and the remaining 28 TRN subfields are used by the eight STAs to perform target sensing.

In some embodiments, when the first training unit in this application includes the K-fold second training units TRN units, the following condition needs to be met:
K*(indication value of EDMG TRN-unit P+indication value of EDMG TRN-unit M)≥N_{STA}*indication value of EDMG TRN-unit P. N_{STA} indicates a quantity of sensing responders.

In other words, a quantity of TRN subfields in the first training unit needs to at least meet that the N_{STA} sensing responders complete phase tracking.

In this case, setting of the second field EDMG TRN-unit M needs to meet the following condition:
indication value of EDMG TRN-unit M≥(N_{STA}-K)*indication value of EDMG TRN-unit P/K.

1002: The sensing transmitter sends the indication information to the sensing receiver.

Correspondingly, the sensing receiver receives the indication information sent by the sensing transmitter.

For an implementation of carrying the TRN unit combination field in step 1002, refer to the descriptions of manners of carrying the additional EDMG TRN-unit M field in the examples in the manner 1, the manner 2, and the manner 3 in step 502.

1003: The sensing receiver interprets the first training unit.

For a joint interpretation manner of step 1003, refer to the description in step 503.

Therefore, in an embodiment of this application, one TRN unit combination field is added, to implement joint interpretation of the TRN units. It is equivalent to increasing a length of the repetition unit in the TRN field by increasing the quantity of TRN subfields, to implement multistatic sensing. In addition, fields such as an EDMG TRN length field, EDMG TRN-unit P, and EDMG TRN-unit M are not modified in this application. A legacy device (legacy device) like a device supporting the 11ay protocol may still read the overall length of the TRN field in the multistatic sensing PPDU in this application.

An embodiment of this application further provides a sensing method. As shown in FIG. 12, an example in which a first device is a sensing initiator, the sensing initiator is a sensing transmitter, a second device is a sensing responder, and the sensing responder is a sensing receiver is used. The method includes the following steps.

1201: The sensing transmitter generates indication information, where the indication information indicates a format of a first training unit in a training field, the first training unit is used by the sensing receiver to perform sensing measurement, the first training unit includes a training subfield indicated by a first field and a training subfield indicated by K-fold second fields, and K is an integer greater than or equal to one.

The TRN subfield indicated by the first field EDMG TRN-unit P is used to perform phase tracking, and the TRN subfield indicated by the second field EDMG TRN-unit M is used to perform scanning sensing.

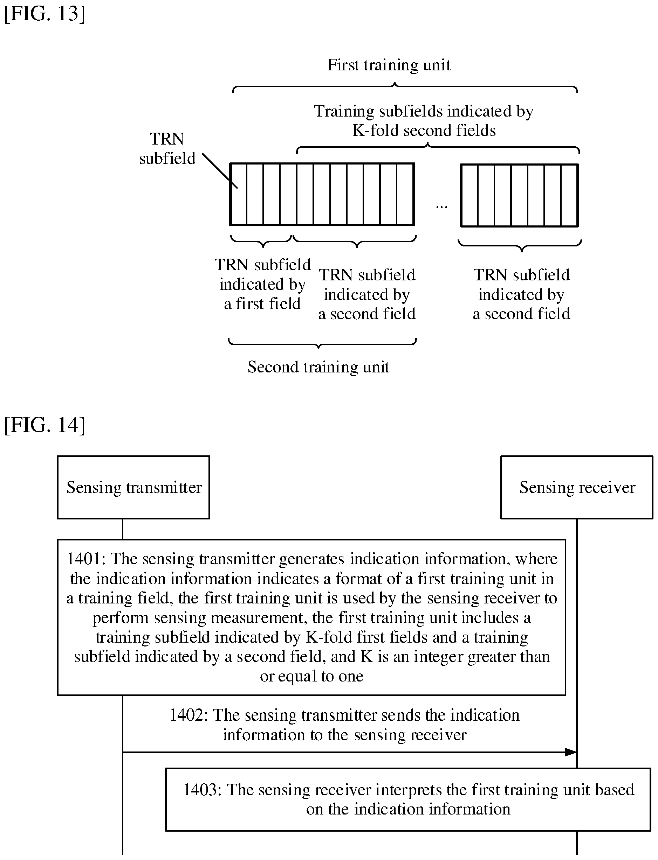

In other words, as shown in FIG. 13, in this application, a quantity of TRN subfields indicated by a second field EDMG TRN-unit M in a second training unit may be multiplied (training subfields indicated by the K-fold second fields), to obtain the first training unit. In some embodiments, a field of the indication information may be, for example, an additional EDMG TRN-unit M field, may be implemented by using reserved bits, or may be implemented by reusing some existing bits, to indicate the format of the first training unit in the TRN field in a multistatic sensing PPDU.

In some embodiments, the additional EDMG TRN-unit M field indicates a high-order bit of a length of the training subfield indicated by the K-fold second fields, and a low-order bit of the length of the training subfield indicated by the K-fold second fields is a bit of the second field. In other words, the high-order bit and the low-order bit jointly indicate the length of the TRN subfield indicated by the K-fold second fields.

It should be noted that, before the quantity of TRN subfields indicated by EDMG TRN-unit M is multiplied, the TRN subfields indicated by EDMG TRN-unit M may include a TRN subfield used to perform phase tracking and a TRN subfield used to perform scanning sensing. Each time one sensing receiver is added, some TRN subfields in the TRN subfields indicated by EDMG TRN-unit M are used as TRN subfields used to perform phase tracking.

After multiplication is performed, the TRN subfields indicated by EDMG TRN-unit M and TRN subfields indicated by the additional EDMG TRN-unit M field may also include a TRN subfield used to perform phase tracking and a TRN subfield used to perform scanning sensing. Similarly, each time one sensing receiver is added, some TRN subfields in the TRN subfields indicated by EDMG TRN-unit M are used as TRN subfields used to perform phase tracking. When the TRN subfields used to perform phase tracking are determined by all sensing receivers, a remaining TRN subfield, other than the TRN subfields used to perform phase tracking, in combined TRN subfields is allocated to the sensing receiver to perform scanning sensing.

For example, for an example of a meaning of the additional EDMG TRN-unit M field, refer to Table 5. It is assumed that the additional EDMG TRN-unit M field occupies 2 bits.

**Table 5 Example of the meaning of the additional EDMG TRN-unit M field**

| Additional EDMG TRN-unit M (2 bits) | Field meaning |
|---|---|
| 00 | It is assumed that the EDMG TRN-unit P field indicates four TRN subfields, and a bit value of the EDMG TRN-unit M field is 1111. In other words, before the indication information is generated, the EDMG TRN-unit M field indicates 16 TRN subfields, and the second training unit in the TRN field is 20 TRN subfields. |
| | After the indication information is generated, that is, after a bit value of the additional EDMG TRN-unit M field and the bit value of the EDMG TRN-unit M field are combined, a combined bit value is 001111. After the additional EDMG TRN-unit M field and the EDMG TRN-unit M field are combined, 16 TRN subfields are still indicated, and the first training unit in the TRN field is still 20 TRN subfields. |
| 01 | It is assumed that the EDMG TRN-unit P field indicates four TRN subfields, and a value of the EDMG TRN-unit M field is 1111. Before the indication information is generated, the EDMG TRN-unit M field indicates 16 TRN subfields, and the second training unit in the TRN field is 20 TRN subfields. |
| | After the indication information is generated, it is equivalent to that a bit value obtained by combining the additional EDMG TRN-unit M field and the EDMG TRN-unit M field is 011111, indicating 32 TRN subfields. It is equivalent to a one-fold increase in the quantity of TRN subfields indicated by EDMG TRN-unit M. In this case, the first training unit in the TRN field is 36 TRN subfields. |
| | In other words, during specific interpretation, add EDMG TRN-unit M and EDMG TRN-unit M are combined as one binary for conversion. Add EDMG TRN-unit M is the high-order bit, and EDMG TRN-unit M is the low-order bit. To be specific, a quantity of TRN subfields used to perform scanning sensing is equal to an indication value of [add EDMG TRN-unit M-EDMG TRN-unit M]. |
| 10 | It is assumed that the EDMG TRN-unit P field indicates four TRN subfields, and a value of the EDMG TRN-unit M field is 1111. Before the indication information is generated, the EDMG TRN-unit M field indicates 16 TRN subfields, and the second training unit in the TRN field is 20 TRN subfields. |
| | After the indication information is generated, it is equivalent to that a bit value obtained by combining the additional EDMG TRN-unit M field and the EDMG TRN-unit M field is 101111, indicating 48 TRN subfields. It is equivalent to a three-fold increase in the quantity of TRN subfields indicated by EDMG TRN-unit M. In this case, the first training unit in the TRN field is 52 TRN subfields. |
| | In other words, during specific interpretation, add EDMG TRN-unit M and EDMG TRN-unit M are combined as one binary for conversion. Add EDMG TRN-unit M is the high-order bit, and EDMG TRN-unit M is the low-order bit. To be specific, a quantity of TRN subfields used to perform scanning sensing is equal to an indication value of [add EDMG TRN-unit M-EDMG TRN-unit M]. |
| Reserved (reserved for further extension) | Further extension may be performed. |

Similarly, it is assumed that before the indication information is generated, a repetition unit in the TRN field is the second training unit, and includes 20 TRN subfields. The bit value of the EDMG TRN-unit M field is 1111. When the bit value of additional EDMG TRN-unit M is 11, it is equivalent to that after the additional EDMG TRN-unit M field and the EDMG TRN-unit M field are combined for extension, the bit value obtained through combination is 111111. To be specific, the indication value of [add EDMG TRN-unit M-EDMG TRN-unit M] is 64, which is equivalent to a four-fold increase in the quantity of TRN subfields indicated by EDMG TRN-unit M. It is assumed that the EDMG TRN-unit P field indicates four TRN subfields. In this case, the repetition unit, that is, the first training unit, in the TRN field, is 68 TRN subfields.

In some embodiments, when the first training unit in this application includes the TRN subfield indicated by the first field EDMG TRN-unit P and the TRN subfield indicated by the K-fold second fields EDMG TRN-unit M, the following condition needs to be met:
indication value of EDMG TRN-unit P+K*indication value of EDMG TRN-unit M≥N_{STA}*indication value of EDMG TRN-unit P. N_{STA} indicates a quantity of sensing responders.

In other words, a quantity of TRN subfields in the first training unit needs to at least meet that the N_{STA} sensing responders complete phase tracking.

In this case, setting of the second field EDMG TRN-unit M needs to meet the following condition:
indication value of EDMG TRN-unit M≥(N_{STA}-1)*indication value of EDMG TRN-unit P/K.

1202: The sensing transmitter sends the indication information to the sensing receiver.

Correspondingly, the sensing receiver receives the indication information sent by the sensing transmitter.

Similar to the implementation of sending the indication information in step 502, for a manner of carrying the additional EDMG TRN-unit M field in step 1202 of this application, refer to the descriptions of manners of carrying additional EDMG TRN-unit M in the manner 1, the manner 2, and the manner 3.

1203: The sensing receiver interprets the first training unit based on the indication information.

Similar to the interpretation of the first training unit by the sensing receiver based on the indication information in step 503, for an interpretation manner in step 1203, refer to the description in step 503.

Therefore, the additional EDMG TRN-unit M field added in this application is equivalent to extending a length of a TRN subfield indicated by a TRN-M field in the 11bf protocol. It is equivalent to increasing a length of the repetition unit in the TRN field by increasing the quantity of TRN subfields, to implement multistatic sensing. Because the TRN subfield and EDMG TRN-unit M are jointly extended as one binary during interpretation, a maximum extension quantity of TRN subfields is large, and a quantity of bits that is used is small, to implement correct information exchange of the TRN field and ensure implementation of the multistatic sensing.

An embodiment of this application further provides a sensing method. As shown in FIG. 14, an example in which a first device is a sensing initiator, the sensing initiator is a sensing transmitter, a second device is a sensing responder, and the sensing responder is a sensing receiver is used. The method includes the following steps.

1401: The sensing transmitter generates indication information, where the indication information indicates a format of a first training unit in a training field, the first training unit is used by the sensing receiver to perform sensing measurement, the first training unit includes a training subfield indicated by K-fold first fields and a training subfield indicated by a second field, and K is an integer greater than or equal to one.

The TRN subfield indicated by the first field EDMG TRN-unit P is used to perform phase tracking, and the TRN subfield indicated by the second field EDMG TRN-unit M is used to perform scanning sensing.

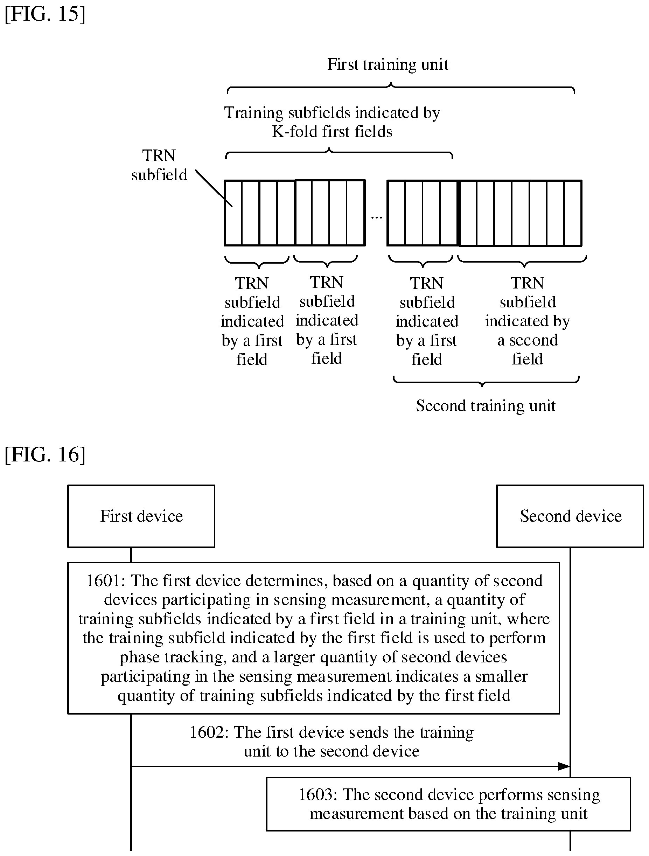

In other words, as shown in FIG. 15, in this application, a quantity of TRN subfields indicated by a first field EDMG TRN-unit M in a second training unit may be multiplied (training subfields indicated by the K-fold first fields), to obtain the first training unit.

In some embodiments, a field of the indication information may be, for example, an additional EDMG TRN-unit P field, may be implemented by using reserved bits, or may be implemented by reusing some existing bits, to indicate the format of the first training unit in the TRN field in a multistatic sensing PPDU.

In some embodiments, the additional EDMG TRN-unit P field indicates a high-order bit of a length of the training subfield indicated by the K-fold first fields, and a low-order bit of the length of the training subfield indicated by the K-fold first fields is a bit of the first field. In other words, the high-order bit and the low-order bit jointly indicate the length of the TRN subfield indicated by the K-fold first fields.

For example, for an example of a meaning of the additional EDMG TRN-unit P field, refer to Table 6. It is assumed that a quantity of bits occupied by the additional EDMG TRN-unit P field is 2 bits.

**Table 6 Example of the meaning of the additional EDMG TRN-unit P field**

| Additional EDMG TRN-unit P (2 bits) | Field meaning |
|---|---|
| 00 | It is assumed that a bit value of the EDMG TRN-unit P is 11, and the EDMG TRN-unit M field indicates 16 TRN subfields. In other words, before the indication information is generated, the EDMG TRN-unit P field indicates four TRN subfields, and the second training unit in the TRN field is 20 TRN subfields. |
| | After the indication information is generated, that is, after a bit value of the additional EDMG TRN-unit P field and the bit value of the EDMG TRN-unit P field are combined, a combined bit value is 0011, and an indication value may be 4. In other words, after the additional EDMG TRN-unit P field and the EDMG TRN-unit P field are combined, four TRN subfields are still indicated, and the first training unit in the TRN field is still 20 TRN subfields. |
| 01 | It is assumed that a bit value of the EDMG TRN-unit P is 11, and the EDMG TRN-unit M field indicates 16 TRN subfields. Before the indication information is generated, the EDMG TRN-unit P field indicates four TRN subfields, and the second training unit in the TRN field is 20 TRN subfields. |
| | After the indication information is generated, it is equivalent to that a bit value obtained by combining the additional EDMG TRN-unit P field and the EDMG TRN-unit P field is 0111, and an indication value may be 8, indicating eight TRN subfields. It is equivalent to a one-fold increase in a quantity of TRN subfields indicated by EDMG TRN-unit P. In this case, the first training unit in the TRN field is 24 TRN subfields. |
| | In other words, during specific interpretation, add EDMG TRN-unit P and EDMG TRN-unit P are combined as one binary for conversion. Add EDMG TRN-unit P is the high-order bit, and EDMG TRN-unit P is the low-order bit. To be specific, a quantity of TRN subfields used to perform phase tracking is equal to an indication value of [add EDMG TRN-unit P-EDMG TRN-unit P]. |
| 10 | It is assumed that a bit value of the EDMG TRN-unit P is 11, and the EDMG TRN-unit M field indicates 16 TRN subfields. Before the indication information is generated, the EDMG TRN-unit P field indicates four TRN subfields, and the second training unit in the TRN field is 20 TRN subfields. |
| | After the indication information is generated, it is equivalent to that a bit value obtained by combining the additional EDMG TRN-unit P field and the EDMG TRN-unit P field is 1011, and an indication value may be 12, indicating 12 TRN subfields. It is equivalent to a three-fold increase in a quantity of TRN subfields indicated by EDMG TRN-unit P. In this case, the first training unit in the TRN field is 28 TRN subfields. |
| | In other words, during specific interpretation, add EDMG TRN-unit P and EDMG TRN-unit P are combined as one binary for conversion. Add EDMG TRN-unit P is the high-order bit, and EDMG TRN-unit P is the low-order bit. To be specific, a quantity of TRN subfields used to perform phase tracking is equal to an indication value of [add EDMG TRN-unit M-EDMG TRN-unit M]. |
| Reserved (reserved for further extension) | Further extension may be performed. |

Similarly, it is assumed that before the indication information is generated, a repetition unit in the TRN field is the second training unit, and includes 20 TRN subfields. The bit value of the EDMG TRN-unit P field is 11. When the bit value of additional EDMG TRN-unit P is 11, it is equivalent to that after the additional EDMG TRN-unit P field and the EDMG TRN-unit P field are combined for extension, the bit value obtained through combination is 1111. To be specific, the indication value of [add EDMG TRN-unit P-EDMG TRN-unit P] is 16, which is equivalent to a four-fold increase in the quantity of TRN subfields indicated by EDMG TRN-unit P. It is assumed that the EDMG TRN-unit M field indicates 16 TRN subfields. In this case, the repetition unit, that is, the first training unit, in the TRN field, is 32 TRN subfields.

It should be noted that the quantity of bits occupied by the additional EDMG TRN-unit P field may be another quantity, for example, 3 bits. In addition, when the additional EDMG TRN-unit P field occupies 2 bits, the indication value shown in Table 6 is also an example, or may be another indication value. This is not limited in this application.

In some embodiments, when the first training unit in this application includes the TRN subfield indicated by the K-fold first fields EDMG TRN-unit P and the TRN subfield indicated by the second field EDMG TRN-unit M, the following condition needs to be met:
K*indication value of EDMG TRN-unit P+indication value of EDMG TRN-unit M≥N_{STA}*indication value of EDMG TRN-unit P. N_{STA} indicates a quantity of sensing responders.

In other words, a quantity of TRN subfields in the first training unit needs to at least meet that the N_{STA} sensing responders complete phase tracking.

In this case, setting of the second field EDMG TRN-unit M needs to meet the following condition:
indication value of EDMG TRN-unit M≥(N_{STA}-K)*indication value of EDMG TRN-unit P.

1402: The sensing transmitter sends the indication information to the sensing receiver.

Correspondingly, the sensing receiver receives the indication information sent by the sensing transmitter.

Similar to the implementation of sending the indication information in step 502, for a manner of carrying the additional EDMG TRN-unit P field in step 1402 of this application, refer to the descriptions of manners of carrying additional EDMG TRN-unit M in the manner 1, the manner 2, and the manner 3.

1403: The sensing receiver interprets the first training unit based on the indication information.

Similar to the interpretation of the first training unit by the sensing receiver based on the indication information in step 503, for an interpretation manner in step 1403, refer to the description in step 503.

Therefore, the additional EDMG TRN-unit P field added in this application is equivalent to extending a length of a TRN subfield indicated by a TRN-P field in the 11bf protocol. It is equivalent to increasing a length of the repetition unit in the TRN field by increasing the quantity of TRN subfields, to implement multistatic sensing. Because the TRN subfield and EDMG TRN-unit M are jointly extended as one binary during interpretation, a maximum extension quantity of TRN subfields is large, and a quantity of bits that is used is small, to implement correct information exchange of the TRN field and ensure implementation of the multistatic sensing.

In this application, a related parameter of a TRN field in the current 11bf protocol may be used, and a use rule of the TRN field is configured on the first device and the second device, to ensure the implementation of the multistatic sensing.

An embodiment of this application further provides a sensing method. As shown in FIG. 16, the method includes the following steps.

1601: A first device determines, based on a quantity of second devices participating in sensing measurement, a quantity of training subfields indicated by a first field in a training unit, where the training subfield indicated by the first field is used to perform phase tracking, and a larger quantity of second devices participating in the sensing measurement indicates a smaller quantity of training subfields indicated by the first field.

An example in which the first device is a sensing initiator, the sensing initiator is a sensing transmitter, the second device is a sensing responder, and the sensing responder is a sensing receiver is used for description in the following.

In some embodiments, the first field is EDMG TRN-unit P that is in a TRN field in a multistatic sensing PPDU and that indicates a TRN subfield used to perform phase tracking in the TRN unit.

It should be understood that, in all embodiments of this application, each sensing receiver corresponds to one EDMG TRN-unit P field, in other words, each sensing receiver may perform phase tracking by using the TRN subfield indicated by the EDMG TRN-unit P field. Each time one sensing receiver is added, one EDMG TRN-unit P field is added accordingly.

However, in step 1601 of this application, when a larger quantity of sensing receivers participate in the sensing measurement, it is equivalent to that a quantity/length of TRN subfields indicated by one EDMG TRN-unit P field decreases.

In some embodiments, when determining that the quantity of sensing receivers participating in the sensing measurement is greater than or equal to a preset threshold, the sensing transmitter determines, according to a correspondence between the quantity of sensing receivers and the quantity of training subfields indicated by the first field, the quantity of training subfields indicated by the first field.

In an example, if N_{STA} sensing receivers participating in multistatic sensing complete phase tracking and scanning sensing in one training unit TRN unit, the correspondence between the quantity of sensing receivers participating in the sensing measurement and the quantity of training subfields indicated by the first field may be shown in Table 7.

**Table 7 Correspondence between N_{STA} and an indication value of the first field EDMG TRN-unit P**

| N_{STA} | Indication value of EDMG TRN-unit P |
|---|---|
| 1 to 5 | 0/1/2/4 |
| 6 to 8 | 0/1/2 |

The training unit TRN unit needs to meet the following condition:
indication value of EDMG TRN-unit P+indication value of EDMG TRN-unit M≥N_{STA}*indication value of EDMG TRN-unit P.

In other words, a quantity of TRN subfields in one TRN unit needs to at least meet that the N_{STA} sensing receivers perform phase tracking.

In other words, setting of the indication value of the second field EDMG TRN-unit M needs to meet the following condition:
indication value of EDMG TRN-unit M≥(N_{STA}-1)*indication value of EDMG TRN-unit P.

Alternatively, in another example, if N_{STA} sensing receivers participating in multistatic sensing complete phase tracking and scanning sensing in one training unit TRN unit, the correspondence between the quantity of sensing receivers participating in the sensing measurement and the quantity of training subfields indicated by the first field may be shown in Table 8.

**Table 8 Correspondence between N_{STA} and an indication value of the first field EDMG TRN-unit P**

| N_{STA} | Indication value of EDMG TRN-unit P |
|---|---|
| 1 to 4 | 0/1/2/4 |
| 5 to 8 | 0/1/2 |

The training unit TRN unit needs to meet the following condition:
indication value of EDMG TRN-unit P+indication value of EDMG TRN-unit M>N_{STA}*indication value of EDMG TRN-unit P.

In other words, a quantity of TRN subfields in one TRN unit needs to be at least greater than a quantity of TRN subfields that the N_{STA} sensing receivers need to perform phase tracking. One TRN unit may not only be used to perform phase tracking, but also have a remaining TRN subfield used to perform scanning sensing.

In other words, setting of the indication value of the second field EDMG TRN-unit M needs to meet the following condition:
indication value of EDMG TRN-unit M>(N_{STA}-1)*indication value of EDMG TRN-unit P.

For example, when the sensing transmitter determines, in a measurement setup process, that the quantity of sensing receivers participating in the multistatic sensing is greater than or equal to five, the sensing transmitter may limit the length of the TRN subfield indicated by the EDMG TRN-unit P field. For example, when determining that five sensing receivers participate in the sensing measurement, the sensing transmitter may determine that the length of the TRN subfield indicated by the EDMG TRN-unit P field needs to be less than or equal to two TRN subfields.

For example, when the quantity of sensing receivers is five, if the length of the TRN subfield indicated by the EDMG TRN-unit P field is two TRN subfields, a maximum quantity of TRN subfields in a single TRN unit is 18. In this case, the five sensing receivers occupy 10 TRN subfields in the single TRN unit to perform phase tracking, and the remaining eight TRN subfields are used by the five sensing receivers to perform scanning sensing.

In some embodiments, rules configured in the sensing transmitter and the sensing receiver include a correspondence between the quantity of sensing receivers and the length of the TRN subfield indicated by the EDMG TRN-unit P field. The sensing transmitter may determine, according to the correspondence and based on the quantity of sensing receivers participating in the sensing measurement, the length of the TRN subfield indicated by the EDMG TRN-unit P field. This is equivalent to determining a structure of the repetition unit TRN unit in the TRN field, so that the sensing receiver determines, based on the structure of the TRN unit, a sequence number of the TRN subfield used to perform phase tracking and a sequence number of the TRN subfield used to perform scanning sensing.

1602: The first device sends the training unit to the second device.

Correspondingly, the second device receives the training unit sent by the first device.

1603: The second device performs sensing measurement based on the training unit.

Therefore, the sensing receiver may execute the phase tracking process when receiving the TRN subfield used to perform phase tracking.

The manner of determining the length of the TRN subfield indicated by the EDMG TRN-unit P field in step 1601 may be applicable to a case in which the sensing transmitter needs more sensing receivers to participate in the sensing measurement, but a requirement on the phase tracking is relatively low. Therefore, in a case in which the quantity of sensing receivers is large, a plurality of sensing receivers can implement correct information exchange of the TRN field and ensure implementation of the multistatic sensing.

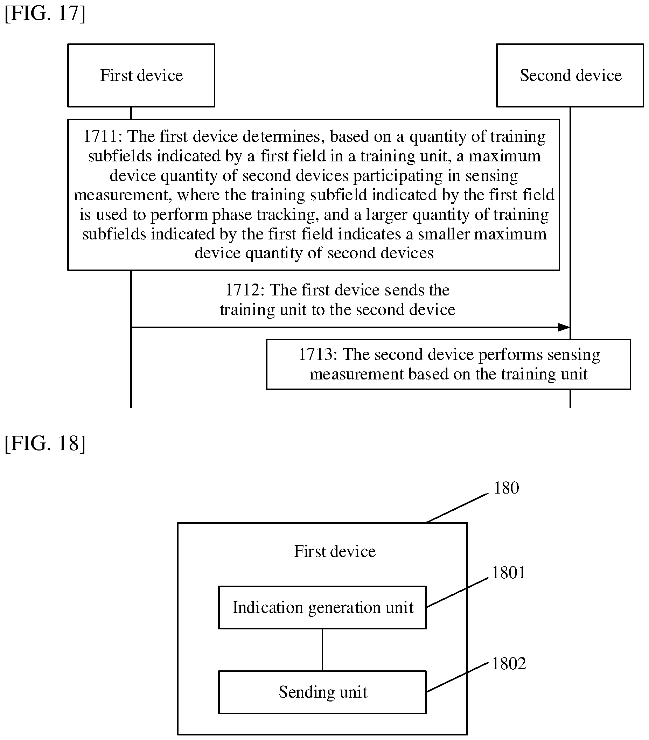

An embodiment of this application further provides a sensing method. As shown in FIG. 17, the method includes the following steps.

1711: A first device determines, based on a quantity of training subfields indicated by a first field in a training unit, a maximum quantity of second devices participating in sensing measurement, where the training subfield indicated by the first field is used to perform phase tracking, and a larger quantity of training subfields indicated by the first field indicates a smaller maximum quantity of second devices.

An example in which the first device is a sensing initiator, the sensing initiator is a sensing transmitter, the second device is a sensing responder, and the sensing responder is a sensing receiver is used for description in the following.

The first field is an EDMG TRN-unit P field that is in a TRN field in a multistatic sensing PPDU and that indicates a quantity of TRN subfields used to perform phase tracking.

It should be understood that, each sensing receiver corresponds to one EDMG TRN-unit P field in the TRN unit, in other words, each sensing receiver may perform phase tracking by using the TRN subfield indicated by the EDMG TRN-unit P field. Each time one sensing receiver is added, one EDMG TRN-unit P field is added accordingly.

In step 1711 of this application, a larger quantity/length of TRN subfields indicated by one EDMG TRN-unit P field indicates a larger quantity of TRN subfields that is occupied by a single sensing receiver and that is used to perform phase tracking, and a smaller quantity of sensing receivers participating in the sensing measurement.

In some embodiments, when determining that the quantity of TRN subfields indicated by the first field EDMG TRN-unit P is greater than or equal to a preset threshold, the sensing transmitter determines, according to a correspondence between the quantity of TRN subfields indicated by EDMG TRN-unit P in the training field and the maximum quantity of sensing receivers, the maximum quantity of sensing receivers.

For example, before the sensing transmitter performs measurement setup on a plurality of sensing receivers, if the sensing transmitter determines that the length of the TRN subfield indicated by the EDMG TRN-unit P field is large and reaches the preset threshold, the sensing transmitter may determine, according to a correspondence between the length of the TRN subfield indicated by the EDMG TRN-unit P field and the maximum quantity of sensing receivers, a maximum quantity of sensing receivers participating in the measurement setup.

For example, the length of the TRN subfield indicated by the EDMG TRN-unit P field is four TRN subfields, in other words, the quantity of TRN subfields occupied by the single sensing receiver to perform phase tracking is four. It is assumed that a maximum length of the TRN subfield in the single TRN unit is 20, and the preset threshold may be four. In other words, a maximum of four sensing receivers can participate in a multistatic sensing process. When four sensing receivers participate in the measurement setup, 16 TRN subfields in the single TRN unit may be used by the four sensing receivers to perform phase tracking, and the remaining four TRN subfields are used by the four sensing receivers to perform scanning sensing.

In some embodiments, rules configured in the sensing transmitter and the sensing receiver include a correspondence between the length of the TRN subfield indicated by the EDMG TRN-unit P field and a quantity of sensing receivers. The sensing transmitter may determine, according to the correspondence and based on the length of the TRN subfield indicated by the EDMG TRN-unit P field, the quantity of sensing receivers participating in the sensing measurement. This is equivalent to determining a structure of a repetition unit TRN unit in the TRN field, so that the sensing receiver determines, based on the structure of the TRN unit, a sequence number of the TRN subfield used to perform phase tracking and a sequence number of the TRN subfield used to perform scanning sensing.

1712: The first device sends the training unit to the second device.

Correspondingly, the second device receives the training unit sent by the first device.

Therefore, the sensing receiver may execute the phase tracking process when receiving the TRN subfield that is in the training unit and that is used to perform phase tracking.

1713: The second device performs sensing measurement based on the training unit.

The manner of determining the quantity of multistatic sensing receivers in step 1711 may be applicable to a case in which a requirement on the phase tracking is relatively high, device performance of the sensing transmitter and/or the sensing receiver is relatively poor, and a TRN subfield with a longer length is required to perform phase tracking. Therefore, in a case in which the quantity of sensing receivers is large, a plurality of sensing receivers can implement correct information exchange of the TRN field and ensure implementation of the multistatic sensing.

In addition, according to embodiments corresponding to FIG. 16 and FIG. 17, the multistatic sensing in this application may complete phase tracking and scanning sensing on a plurality of sensing receivers in one TRN unit. In addition, fields such as an EDMG TRN length field, an EDMG TRN-unit P field, and an EDMG TRN-unit M field are not modified in this application. A legacy device (legacy device) like a device under the 11ay protocol may still read the overall length of TRN in the multistatic sensing PPDU. This has good compatibility performance.

Meanings of the N_{STA} indication in this application may include:
(1) The N_{STA} in this application may be a quantity of devices that respond to participation of multistatic sensing setup in a sensing measurement setup process;
(2) the N_{STA} in this application may alternatively be a quantity of devices indicated by a field num of STAs in instance in a DMG sensing request (DMG sensing request) frame in a sensing instance; and
(3) the N_{STA} in this application may alternatively be a quantity of devices that is finally confirmed and that participates in receiving of a multistatic PPDU in the sensing instance.

If there is only one request response phase (or initialization phase) and one corresponding measurement phase (may include one or more EDMG multistatic sensing PPDUs) in the sensing instance, all STAs that request sensing participate in the sensing instance, N_{STA} in the case (2) and N_{STA} in the case (3) are the same.

Essentially, N_{STA} in the case (1)≥N_{STA} in the case (2)≥N_{STA} in the case (3).

It should be understood that foregoing embodiments describe the measurement process in the DMG multistatic sensing. In the DMG multistatic sensing process, if feedback needs to be performed in a sensing instance, feedback time or a feedback sequence may be further agreed upon in embodiments of this application. Two cases are described herein.

In some embodiments, to ensure smooth implementation of the feedback phase after the sensing measurement, the sensing initiator may add the first field to the DMG sensing request (DMG sensing request) frame. The first field indicates whether a DMG sensing report (DMG sensing report) in the sensing instance needs to be triggered through polling.

The DMG sensing request frame may be an instance request in embodiments of this application. The DMG sensing report may be a report response in embodiments of this application.

For example, the first field may be a poll before report field carried by the sensing initiator in the TDD beamforming information field in the DMG sensing request frame.

When a bit value of the poll before report field is 0, it indicates that the sensing responder does not need to feed back a DMG sensing report response after receiving a DMG sensing poll, and the sensing responder may send the DMG sensing report at reporting time informed by the sensing transmitter/sensing initiator. If a bit value of the poll before report field is 1, it indicates that the sensing responder needs to feed back a DMG sensing report after receiving a DMG sensing poll. The sensing responder sends the DMG sensing report after short interframe space (short interframe space, SIFS) time after receiving a polling frame/DMG sensing poll (DMG sensing poll) frame sent by the sensing initiator/sensing transmitter.

In some embodiments, when the bit value of the poll before report field is 1, the sensing initiator/sensing transmitter may add polling time corresponding to the sensing responder to the DMG sensing request frame. The polling time indicates time at which the sensing initiator/sensing transmitter sends the DMG sensing poll to the sensing responder. A polling time field may be carried in the TDD beamforming information field in the DMG sensing request frame.

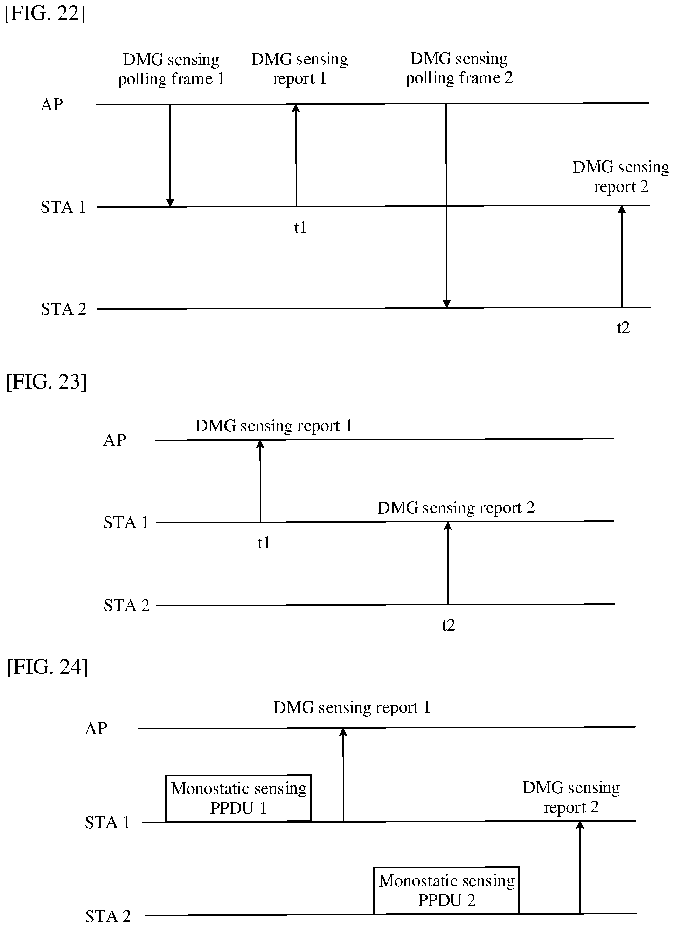

For example, FIG. 22 is a schematic diagram of a measurement feedback in a DMG multistatic sensing scenario. For example, the sensing initiator/sensing transmitter is an AP, and sensing responders include a STA 1 and a STA 2. The AP sends a DMG sensing polling frame 1 to the STA 1, and the STA 1 starts to send a DMG sensing report 1 of the STA 1 at a moment t1 after SIFS time after receiving the polling frame. Then, the AP sends a DMG sensing polling frame 2 to the STA 2, and the STA 2 starts to send a DMG sensing report 2 of the STA 2 at a moment t2 after SIFS time after receiving the DMG sensing polling frame 2.

In some embodiments, when the bit value of the poll before report field is 0, the sensing initiator/sensing transmitter may add a report time field (report time field) corresponding to the sensing responder to the DMG sensing request frame. The report time field may indicate time at which the sensing responder sends the DMG sensing report in the sensing instance. For example, the report time field may be carried in the TDD beamforming information field in the DMG sensing request frame, and different sensing responders may send DMG sensing reports based on time that is indicated by the sensing initiator/sensing transmitter and that is of the DMG sensing report.

For example, FIG. 23 is a schematic diagram of another measurement feedback in a DMG multistatic sensing scenario. For example, the sensing initiator is an AP, and sensing responders include a STA 1 and a STA 2. A DMG sensing request frame sent by the AP to the STA 1 indicates that time at which the STA 1 sends a DMG sensing report is t1, and a DMG sensing request frame sent by the AP to the STA 2 indicates that time at which the STA 2 sends a DMG sensing report is t2. That is, the STA 1 sends the DMG sensing report 1 to the AP at the moment t1, and the STA 2 sends the DMG sensing report 2 to the AP at the moment t2.

In addition to the DMG multistatic sensing scenario, there is another DMG coordinated monostatic sensing (DMG coordinated monostatic sensing) scenario. Different from the DMG multistatic sensing, a sensing responder in the DMG coordinated monostatic sensing is used as both a transmitter and a receiver in a sensing process, that is, self-transmitting and self-receiving.

The DMG sensing polling time or the DMG sensing reporting time may also be sent in a TDD beamforming information field in a DMG sensing request frame in the DMG coordinated monostatic sensing scenario. A specific implementation process is different from that in the DMG multistatic sensing scenario.

Specifically, in the DMG coordinated monostatic sensing scenario, the TDD beamforming information field in the DMG sensing request frame sent by the sensing initiator to each sensing responder may carry a second field, for example, a report after PPDU field/bit, indicating whether the sensing responder sends a DMG sensing report after SIFS time after completing sending of a sensing PPDU.

For example, if a bit value of the second field is 0, it indicates that each sensing responder sends the DMG sensing report after the SIFS time after completing sending of a monostatic sensing PPDU (monostatic sensing PPDU). In this case, it is equivalent to that the DMG sensing request frame does not need to carry an indication of whether polling is required, and does not need to carry the polling time or the reporting time. For example, FIG. 24 is a schematic diagram of a measurement feedback in a DMG coordinated monostatic sensing scenario. The sensing initiator is an AP, and sensing responders include a STA 1 and a STA 2. After SIFS time after sending a monostatic sensing PPDU 1, the STA 1 sends a DMG sensing report 1 to the AP; and after the SIFS time after sending a monostatic sensing PPDU 2, the STA 2 sends a DMG sensing report 2 to the AP.

If a bit value of a second field is 1, it indicates that all sensing responders feed back DMG sensing reports after completing sending of monostatic sensing PPDUs. In other words, a single sensing responder does not need to send the DMG sensing report after the SIFS time after completing sending of the monostatic sensing PPDU.

In this case, similar to the DMG multistatic sensing scenario, the TDD beamforming information field in the DMG sensing request frame may carry the first field, that is, the poll before report field/bit.

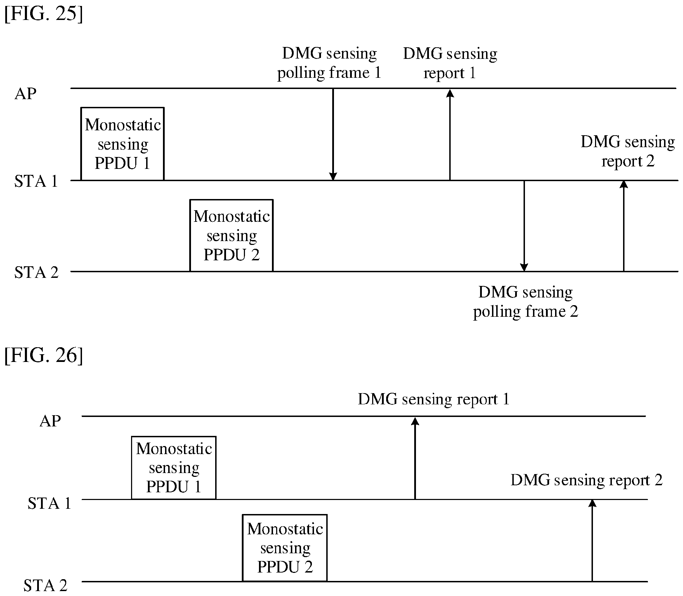

When the bit value of the poll before report field/bit is 1, it indicates that the sensing responder needs to send the DMG sensing report after the SIFS time after receiving the polling frame. In this case, the DMG sensing request frame may further carry a polling time field when the sensing initiator initiates polling, or may not carry the polling time field. In this case, polling time is determined by the AP. For example, FIG. 25 is a schematic diagram of another measurement feedback in a DMG coordinated monostatic sensing scenario. The sensing initiator is an AP, and sensing responders include a STA 1 and a STA 2. After the STA 1 sends a monostatic sensing PPDU 1 and the STA 2 sends a monostatic sensing PPDU 2, in the measurement feedback phase, the AP may send a DMG sensing polling frame 1 to the STA 1 at polling time that is carried in the DMG sensing request and that corresponds to the STA 1, the STA 1 sends a DMG sensing report 1 to the AP after the SIFS after receiving the poll, the AP sends a DMG sensing polling frame 2 to the STA 2 at polling time that is carried in the DMG sensing request and that corresponds to the STA 2, and the STA 2 sends a DMG sensing report 2 to the AP after the SIFS after receiving the poll.

When polling is not required, that is, when the bit value of the poll before report field/bit is 0, it indicates that the sensing responder does not need to send the DMG sensing report to the sensing initiator after receiving the DMG sensing polling frame. In this case, the DMG sensing request frame may carry DMG sensing report time corresponding to the sensing responder. For example, FIG. 26 is a schematic diagram of another measurement feedback in a DMG coordinated monostatic sensing scenario. The sensing initiator is an AP, and sensing responders include a STA 1 and a STA 2. After the STA 1 sends a monostatic sensing PPDU 1 and the STA 2 sends a monostatic sensing PPDU 2, the STA 1 may send a DMG sensing report 1 to the AP at DMG sensing report time t1, and the STA 1 may send a DMG sensing report 2 to the AP at DMG sensing report time t2.

It should be understood that, in embodiments of this application, polling may be finally performed on all the sensing responders by default, or polling may not be performed on all the sensing responders. In other words, the poll before report field may not need to be carried in the DMG sensing request frame. A time field carried in the DMG sensing request frame is time at which the sensing initiator/sensing transmitter initiates polling or time at which the sensing responder feeds back the DMG sensing report.

In some embodiments, a procedure in the DMG coordinated monostatic sensing scenario in embodiments of this application may be correspondingly extended to a DMG coordinated bistatic sensing (DMG coordinated bistatic sensing) procedure.

It may be understood that, to implement the foregoing functions, the first device and the second device include a corresponding hardware structure and/or a corresponding software module for performing each function. With reference to algorithm steps of examples described in embodiments disclosed in this specification, this application can be implemented in a form of hardware or a combination of hardware and computer software. Whether a function is performed by hardware or hardware driven by computer software depends on particular applications and design constraint conditions of the technical solutions. A person skilled in the art may use different methods to implement the described functions for each particular application with reference to embodiments, but it should not be considered that the implementation goes beyond the scope of this application.

In embodiments, an electronic device may be divided into functional modules based on the foregoing method examples. For example, each functional module corresponding to each function may be obtained through division, or two or more functions may be integrated into one processing module. The integrated module may be implemented in a form of hardware. It should be noted that module division in embodiments is an example and is merely logical function division. In actual implementation, there may be another division manner.

When each function module is obtained through division based on each corresponding function, FIG. 18 is a possible schematic composition diagram of a first device 180 in the foregoing embodiments. As shown in FIG. 18, the first device 180 may include an indication generation unit 1801 and a sending unit 1802. The first device 180 may be a sensing initiator/sensing transmitter in multistatic sensing.

The indication generation unit 1801 may be configured to support the first device 180 to perform the foregoing step 401, step 501, step 1001, step 1201, step 1401, and the like, and/or used in another process of the technology described in this specification.

The sending unit 1802 may be configured to support the first device 180 to perform the foregoing step 402, step 502, step 802, step 1202, step 1402, step 1602, and the like, and/or used in another process of the technology described in this specification.

It should be noted that, all related content of steps in the foregoing method embodiments may be cited in function descriptions of corresponding functional modules. Details are not described herein again.

The first device 180 according to an embodiment is configured to perform the foregoing sensing method, and therefore, effect the same as that of the foregoing implementation can be achieved.

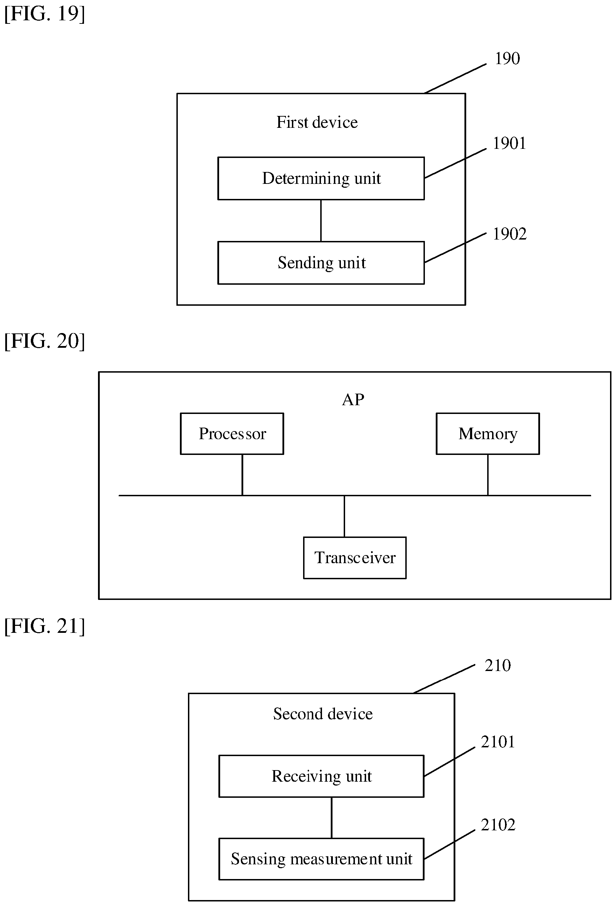

When each function module is obtained through division based on each corresponding function, FIG. 19 is a possible schematic composition diagram of a first device 190 in the foregoing embodiments. As shown in FIG. 19, the first device 190 may include a determining unit 1901 and a sending unit 1902.

The determining unit 1901 may be configured to support the first device 190 to perform the foregoing step 1601, step 1711, and the like, and/or used in another process of the technology described in this specification.

The sending unit 1902 may be configured to support the first device 190 to perform the foregoing step 1602 and step 1712, and/or used in another process of the technology described in this specification.

It should be noted that, all related content of steps in the foregoing method embodiments may be cited in function descriptions of corresponding functional modules. Details are not described herein again.

The first device 180 and the first device 190 according to an embodiment are configured to perform the foregoing sensing method, and therefore, effect the same as that of the foregoing implementation can be achieved.

When an integrated unit is used, the first device 180/first device 190 may include a processing module, a storage module, and a communication module. The processing module may be configured to control and manage an action of the first device 180/first device 190, for example, may be configured to support the first device 180/first device 190 to perform the steps performed by the indication generation unit 1801 and the determining unit 1901. The storage module may be configured to support the first device 180/first device 190 to store program code, data, and the like. The communication module may be configured to support communication between the first device 180/first device 190 and another device, for example, a sensing receiver.

The processing module may be a processor or a controller. The processor may implement or execute various example logical blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communication module may be specifically a device that interacts with another electronic device like a radio frequency circuit, a Bluetooth chip, or a Wi-Fi chip.

In an embodiment, when the processing module is a processor, the storage module is a memory, and the communication module is a transceiver, the first device 180/first device 190 in an embodiment may be a sensing initiator/sensing transmitter with a structure shown in FIG. 20, and may be specifically, for example, an AP.

When each function module is obtained through division based on each corresponding function, FIG. 21 is a possible schematic composition diagram of a second device 210 in the foregoing embodiments. As shown in FIG. 21, the second device 210 may include a receiving unit 2101 and a sensing measurement unit 2102.

The receiving unit 2101 may be configured to support the second device 210 to perform a corresponding action in step 402, a corresponding action in step 502, a corresponding action in step 1002, a corresponding action in step 1202, a corresponding action in step 1402, a corresponding action in step 1602, a corresponding action in step 1712, and the like, and/or used in another process of the technology described in this specification.

The sensing measurement unit 2102 may be configured to support the second device 210 to perform step 503, step 1003, step 1203, step 1403, step 1603, step 1713, and/or used in another process of the technology described in this specification.

It should be noted that, all related content of steps in the foregoing method embodiments may be cited in function descriptions of corresponding functional modules. Details are not described herein again.

The second device 210 according to an embodiment is configured to perform the foregoing sensing method, and therefore, effect the same as that of the foregoing implementation can be achieved.

When an integrated unit is used, the second device 210 may include a processing module, a storage module, and a communication module. The processing module may be configured to control and manage an action of the second device 210, for example, may be configured to support the second device 210 to perform the steps performed by the sensing measurement unit 2102. The storage module may be configured to support the second device 210 to store program code, data, and the like. The communication module may be configured to support communication between the second device 210 and another device, for example, a sensing transmitter.

The processing module may be a processor or a controller. The processor may implement or execute various example logical blocks, modules, and circuits described with reference to content disclosed in this application. The processor may alternatively be a combination for implementing a computing function, for example, a combination including one or more microprocessors or a combination of a DSP and a microprocessor. The storage module may be a memory. The communication module may be specifically a device that interacts with another electronic device like a radio frequency circuit, a Bluetooth chip, or a Wi-Fi chip.

In an embodiment, when the processing module is a processor, the storage module is a memory, and the communication module is a transceiver, the second device 210 in an embodiment may alternatively have a structure shown in FIG. 20. In this case, the second device 210 may be a sensing responder/sensing receiver, specifically, for example, may be a STA.

An embodiment of this application further provides an electronic device, including one or more processors and one or more memories. The one or more memories are coupled to the one or more processors. The one or more memories are configured to store computer program code, and the computer program code includes computer instructions. When the one or more processors execute the computer instructions, the electronic device is enabled to perform the foregoing related method steps, to implement the sensing method in the foregoing embodiments. The electronic device is, for example, the foregoing transmitter, sensing transmitter, and sensing receiver.

An embodiment of this application further provides a computer storage medium. The computer storage medium stores computer instructions. When the computer instructions are run on an electronic device, the electronic device is enabled to perform the foregoing related method steps, to implement the sensing method in the foregoing embodiments.

An embodiment of this application further provides a computer program product. When the computer program product is run on a computer, the computer is enabled to perform the foregoing related steps, to implement the sensing method performed by the electronic device in the foregoing embodiments.

In addition, an embodiment of this application further provides an apparatus. The apparatus may be specifically a chip, a component, or a module. The apparatus may include a processor and a memory that are connected. The memory is configured to store computer-executable instructions, and when the apparatus runs, the processor may execute the computer-executable instructions stored in the memory, so that the chip performs the sensing method performed by the sensing transmitter/transmitter in the foregoing method embodiments.

The first device/sensing initiator/sensing transmitter, the second device/sensing responder/sensing receiver, the computer storage medium, the computer program product, or the chip provided in embodiments is configured to perform the corresponding method provided above. Therefore, for beneficial effect that can be achieved by the first device/sensing initiator/sensing transmitter, the second device/sensing responder/sensing receiver, the computer storage medium, the computer program product, or the chip provided in embodiments, refer to beneficial effect in the corresponding method provided above. Details are not described herein again.

Another embodiment of this application provides a system. The system may include the foregoing first device/sensing initiator/sensing transmitter and at least one second device/sensing responder/sensing receiver, and may be configured to implement the foregoing sensing method.

Based on the descriptions about the foregoing implementations, a person skilled in the art may understand that, for a purpose of convenient and brief description, division into the foregoing functional modules is used as an example for illustration. In actual application, the foregoing functions may be allocated to different functional modules and implemented based on requirements. In other words, an inner structure of an apparatus is divided into different functional modules to implement all or some of the functions described above.

In the several embodiments provided in this application, it should be understood that the disclosed apparatuses and methods may be implemented in other manners. For example, the described apparatus embodiments are merely examples. For example, division into the modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium, for example, a USB flash drive, a removable hard disk, a read-only memory (read-only memory, ROM), a random access memory (random access memory, RAM), a magnetic disk, an optical disc, or the like that can store program code.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A sensing method, wherein the method comprises:
generating, by a first device, indication information, wherein the indication information indicates a format of a first training unit in a training field, the first training unit is used by a second device to perform sensing measurement, a length of the first training unit is longer than a length of a second training unit, and the second training unit comprises a training subfield indicated by a first field and a training subfield indicated by a second field; and
sending, by the first device, the indication information to the second device.

2. The method according to claim 1, wherein the training field is comprised in a multistatic sensing physical layer convergence protocol data unit PPDU.

3. The method according to claim 1 or 2, wherein the first training unit comprises the training subfield indicated by the first field and/or the training subfield indicated by the second field, the first field is an enhanced directional multi-gigabit training unit EDMG TRN-unit P field, and the second field is an EDMG TRN-unit M field.

4. The method according to any one of claims 1 to 3, wherein the first training unit comprises K-fold second training units, and K is an integer greater than or equal to one.

5. The method according to claim 4, wherein the first training unit meets the following condition:
K*(indication value of EDMG TRN-unit P+indication value of EDMG TRN-unit M)≥N_{STA}*indication value of EDMG TRN-unit P, wherein
EDMG TRN-unit P represents the first field, EDMG TRN-unit M represents the second field, and N_{STA} represents a quantity of second devices.

6. The method according to any one of claims 1 to 3, wherein the first training unit comprises the training subfield indicated by the first field and a training subfield indicated by K-fold second fields, and K is an integer greater than or equal to one.

7. The method according to claim 6, wherein the first training unit meets the following condition:
indication value of EDMG TRN-unit P+K*indication value of EDMG TRN-unit M≥N_{STA}*indication value of EDMG TRN-unit P, wherein
EDMG TRN-unit P represents the first field, EDMG TRN-unit M represents the second field, and N_{STA} represents a quantity of second devices.

8. The method according to any one of claims 1 to 3, wherein the first training unit comprises a training subfield indicated by K-fold first fields and the training subfield indicated by the second field, and K is an integer greater than or equal to one.

9. The method according to claim 8, wherein the first training unit meets the following condition:
K*indication value of EDMG TRN-unit P+indication value of EDMG TRN-unit M≥N_{STA}*indication value of EDMG TRN-unit P, wherein
EDMG TRN-unit P represents the first field, EDMG TRN-unit M represents the second field, and N_{STA} represents a quantity of second devices.

10. The method according to any one of claims 1 to 3, wherein the first training unit comprises at least one second training unit and K training subfields, and K is an integer greater than or equal to one.

11. The method according to claim 10, wherein when the first training unit comprises one second training unit and the K training subfields, the first training unit meets the following condition:
indication value of EDMG TRN-unit M+indication value of EDMG TRN-unit P+K≥N_{STA}*indication value of EDMG TRN-unit P, wherein
EDMG TRN-unit P represents the first field, EDMG TRN-unit M represents the second field, and N_{STA} represents a quantity of second devices.

12. The method according to claim 10, wherein the K training subfields are K training subfields immediately following the training subfield indicated by the second field.

13. The method according to claim 10, wherein the K training subfields are K training subfields immediately following the training subfield indicated by the first field.

14. The method according to claim 6, wherein the indication information indicates a high-order bit of a length of the training subfield indicated by the K-fold second fields, and a low-order bit of the length of the training subfield indicated by the K-fold second fields is a bit of the second field.

15. The method according to claim 8, wherein the indication information indicates a high-order bit of a length of the training subfield indicated by the K-fold first fields, and a low-order bit of the length of the training subfield indicated by the K-fold first fields is a bit of the first field.

16. The method according to any one of claims 1 to 15, wherein the generating, by a first device, indication information comprises:
generating, by the first device, the indication information when determining that at least one of following two conditions is met, wherein
the two conditions comprise:
the quantity of second devices participating in the sensing measurement is greater than or equal to a first preset quantity; and
a quantity of training subfields indicated by the first field is greater than or equal to a second preset quantity.

17. The method according to any one of claims 1 to 16, wherein the indication information is carried in a sensing measurement setup request, a multistatic sensing request, or the multistatic sensing physical layer convergence protocol data unit PPDU.

18. A sensing method, wherein the method comprises:
receiving, by a second device, indication information, wherein the indication information indicates a format of a first training unit in a training field, the first training unit is used by the second device to perform sensing measurement, a length of the first training unit is longer than a length of a second training unit, and the second training unit comprises a training subfield indicated by a first field and a training subfield indicated by a second field; and
performing, by the second device, sensing measurement based on the format of the first training unit.

19. The method according to claim 18, wherein the training field is comprised in a multistatic sensing physical layer convergence protocol data unit PPDU.

20. The method according to claim 18 or 19, wherein
the first training unit comprises the training subfield indicated by the first field and/or the training subfield indicated by the second field, the first field is an enhanced directional multi-gigabit training unit EDMG TRN-unit P field, and the second field is an EDMG TRN-unit M field.

21. The method according to any one of claims 18 to 20, wherein the first training unit comprises K-fold second training units, and K is an integer greater than or equal to one.

22. The method according to claim 21, wherein the first training unit meets the following condition:
K*(indication value of EDMG TRN-unit P+indication value of EDMG TRN-unit M)≥N_{STA}*indication value of EDMG TRN-unit P, wherein
EDMG TRN-unit P represents the first field, EDMG TRN-unit M represents the second field, and N_{STA} represents a quantity of second devices.

23. The method according to any one of claims 18 to 20, wherein the first training unit comprises the training subfield indicated by the first field and a training subfield indicated by K-fold second fields, and K is an integer greater than or equal to one.

24. The method according to claim 23, wherein the first training unit meets the following condition:
indication value of EDMG TRN-unit P+K*indication value of EDMG TRN-unit M≥N_{STA}*indication value of EDMG TRN-unit P, wherein
EDMG TRN-unit P represents the first field, EDMG TRN-unit M represents the second field, and N_{STA} represents a quantity of second devices.

25. The method according to any one of claims 18 to 20, wherein the first training unit comprises a training subfield indicated by K-fold first fields and the training subfield indicated by the second field, and K is an integer greater than or equal to one.

26. The method according to claim 25, wherein the first training unit meets the following condition:
K*indication value of EDMG TRN-unit P+indication value of EDMG TRN-unit M≥N_{STA}*indication value of EDMG TRN-unit P, wherein
EDMG TRN-unit P represents the first field, EDMG TRN-unit M represents the second field, and N_{STA} represents a quantity of second devices.

27. The method according to any one of claims 18 to 20, wherein the first training unit comprises at least one second training unit and K training subfields, and K is an integer greater than or equal to one.

28. The method according to claim 27, wherein when the first training unit comprises one second training unit and the K training subfields, the first training unit meets the following condition:
indication value of EDMG TRN-unit M+indication value of EDMG TRN-unit P+K≥N_{STA}*indication value of EDMG TRN-unit P, wherein
EDMG TRN-unit P represents the first field, EDMG TRN-unit M represents the second field, and N_{STA} represents a quantity of second devices.

29. The method according to claim 27, wherein the K training subfields are K training subfields immediately following the training subfield indicated by the second field.

30. The method according to claim 27, wherein the K training subfields are K training subfields immediately following the training subfield indicated by the first field.

31. The method according to claim 23, wherein the indication information indicates a high-order bit of a length of the training subfield indicated by the K-fold second fields, and a low-order bit of the length of the training subfield indicated by the K-fold second fields is a bit of the second field.

32. The method according to claim 25, wherein the indication information indicates a high-order bit of a length of the training subfield indicated by the K-fold first fields, and a low-order bit of the length of the training subfield indicated by the K-fold first fields is a bit of the first field.

33. The method according to any one of claims 18 to 32, wherein the indication information is carried in a sensing measurement setup request, a multistatic sensing request, or the multistatic sensing physical layer convergence protocol data unit PPDU.

34. A sensing method, wherein the method comprises:
determining, by a first device based on a quantity of second devices participating in sensing measurement, a quantity of training subfields indicated by a first field in a training unit, wherein the first field is an enhanced directional multi-gigabit training unit EDMG TRN-unit P field, and a larger quantity of second devices participating in the sensing measurement indicates a smaller quantity of training subfields indicated by the first field; and
sending, by the first device, the training unit to the second device.

35. The method according to claim 34, wherein the training unit is comprised in a training field in a multistatic sensing physical layer convergence protocol data unit PPDU.

36. The method according to claim 34 or 35, wherein the determining, by a first device based on a quantity of second devices participating in sensing measurement, a quantity of training subfields indicated by a first field in a training unit comprises:
when determining that the quantity of second devices participating in the sensing measurement is greater than or equal to a preset threshold, determining, by the first device according to a correspondence between the quantity of second devices and the quantity of training subfields indicated by the first field, the quantity of training subfields indicated by the first field.

37. The method according to any one of claims 34 to 36, wherein the training unit further comprises a training subfield indicated by a second field, and the second field is an enhanced directional multi-gigabit training unit EDMG TRN-unit M field; and
setting of an indication value of EDMG TRN-unit M needs to meet the following condition:
indication value of EDMG TRN-unit M>(N_{STA}-1)*indication value of EDMG TRN-unit P, wherein N_{STA} represents the quantity of second devices.

38. A sensing method, wherein the method comprises:
determining, by a first device based on a quantity of training subfields indicated by a first field in a training unit, a maximum quantity of second devices participating in sensing measurement, wherein the first field is an enhanced directional multi-gigabit training unit EDMG TRN-unit P field, and a larger quantity of training subfields indicated by the first field indicates a smaller maximum quantity of second devices; and
sending, by the first device, the training unit to the second device.

39. The method according to claim 38, wherein the training unit is comprised in a training field in a multistatic sensing physical layer convergence protocol data unit PPDU.

40. The method according to claim 38 or 39, wherein the determining, by a first device based on a quantity of training subfields indicated by a first field in a training unit, a maximum quantity of second devices participating in sensing measurement comprises:
when determining that the quantity of training subfields indicated by the first field is greater than or equal to a preset threshold, determining, by the first device, the maximum quantity of second devices according to a correspondence between the quantity of training subfields indicated by the first field in the training unit and the maximum quantity of second devices.

41. A sensing apparatus, wherein the sensing apparatus is comprised in a first device, and the sensing apparatus comprises:
an indication generation unit, configured to generate indication information, wherein the indication information indicates a format of a first training unit in a training field, the first training unit is used by a second device to perform sensing measurement, a length of the first training unit is longer than a length of a second training unit, and the second training unit comprises a training subfield indicated by a first field and a training subfield indicated by a second field; and
a sending unit, configured to send the indication information to the second device.

42. A sensing apparatus, wherein the sensing apparatus is comprised in a second device, and the sensing apparatus comprises:
a receiving unit, configured to receive indication information, wherein the indication information indicates a format of a first training unit in a training field, the first training unit is used by the second device to perform sensing measurement, a length of the first training unit is longer than a length of a second training unit, and the second training unit comprises a training subfield indicated by a first field and a training subfield indicated by a second field; and
a sensing measurement unit, configured to perform sensing measurement based on the format of the first training unit.

43. A sensing apparatus, wherein the sensing apparatus is comprised in a first device, and the sensing apparatus comprises:
a determining unit, configured to determine, based on a quantity of second devices participating in sensing measurement, a quantity of training subfields indicated by a first field in a training unit, wherein the first field is an enhanced directional multi-gigabit training unit EDMG TRN-unit P field, and a larger quantity of second devices participating in the sensing measurement indicates a smaller quantity of training subfields indicated by the first field; and
a sending unit, configured to send the training unit to the second device.

44. A sensing apparatus, wherein the sensing apparatus is comprised in a first device, and the sensing apparatus comprises:
a determining unit, configured to determine, based on a quantity of training subfields indicated by a first field in a training unit, a maximum quantity of second devices participating in sensing measurement, wherein the first field is an enhanced directional multi-gigabit training unit EDMG TRN-unit P field, and a larger quantity of training subfields indicated by the first field indicates a smaller maximum quantity of second devices; and
a sending unit, configured to send the training unit to the second device.

45. A communication system, comprising the sensing apparatus according to claim 41 and the sensing apparatus according to claim 42.

46. A computer-readable storage medium, configured to store a computer program, wherein the computer program comprises instructions used to perform the method according to any one of claims 1 to 17.

47. A computer-readable storage medium, configured to store a computer program, wherein the computer program comprises instructions used to perform the method according to any one of claims 18 to 33.

48. A computer-readable storage medium, configured to store a computer program, wherein the computer program comprises instructions used to perform the method according to any one of claims 34 to 37.

49. A computer-readable storage medium, configured to store a computer program, wherein the computer program comprises instructions used to perform the method according to any one of claims 38 to 40.
